(19) Europäisches Patentamt
European Patent Office
Office européen des brevets

(11) **EP 4 511 207 B1**

(12) **EUROPÄISCHE PATENTSCHRIFT**

(45) Veröffentlichungstag und Bekanntmachung des Hinweises auf die Patenterteilung:
**04.03.2026 Patentblatt 2026/10**

(21) Anmeldenummer: **23720042.3**

(22) Anmeldetag: **11.04.2023**

(51) Internationale Patentklassifikation (IPC):
***B29C 48/00*** *(2019.01)* ***B29C 48/405*** *(2019.01)*
***B29C 48/29*** *(2019.01)* ***B29B 7/48*** *(2006.01)*
***B29B 7/94*** *(2006.01)*

(52) Gemeinsame Patentklassifikation (CPC):
**B29C 48/405; B29B 7/48; B29B 7/726;**
**B29B 7/823; B29B 7/90; B29B 9/12; B29C 48/022;**
**B29C 48/29;** B29B 7/845; B29B 9/06;
B29K 2069/00; B29K 2105/0005

(86) Internationale Anmeldenummer:
**PCT/EP2023/059380**

(87) Internationale Veröffentlichungsnummer:
**WO 2023/202910 (26.10.2023 Gazette 2023/43)**

(54) **VERFAHREN ZUR HERSTELLUNG EINER PLASTISCHEN MASSE MIT VERBESSERTEN EIGENSCHAFTEN**

METHOD FOR THE PREPARATION OF A PLASTIC MASS WITH ENHANCED PROPERTIES

PROCÉDÉ DE FABRICATION D’UNE MASSE EN MATIÈRE PLASTIQUE AVEC DES PROPRIÉTÉS AMÉLIORÉES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **19.04.2022 EP 22168866**

(43) Veröffentlichungstag der Anmeldung:
**26.02.2025 Patentblatt 2025/09**

(73) Patentinhaber: **Covestro Deutschland AG**
**51373 Leverkusen (DE)**

(72) Erfinder:
- **RUDOLF, Reiner**
  **40764 Langenfeld (DE)**
- **WU, Youjin**
  **Zhangjiagang City, Jiangsu 333300 (CN)**
- **CONZEN, Carsten**
  **51375 Leverkusen (DE)**
- **BIERDEL, Michael**
  **51373 Leverkusen (DE)**
- **KOENIG, Thomas**
  **51375 Leverkusen (DE)**

(74) Vertreter: **Levpat**
**c/o Covestro AG**
**Gebäude K12**
**51365 Leverkusen (DE)**

(56) Entgegenhaltungen:
**EP-A1- 2 270 073**
**EP-A1- 2 803 457**
**JP-A- H09 290 455**
**JP-A- H11 188 775**
**US-A1- 2010 210 789**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 511 207 B1

## Beschreibung

Gegenstand der vorliegenden Erfindung ist ein Verfahren zur Herstellung einer plastischen Masse mit verbesserten Eigenschaften aus einer Formulierung enthaltend mindestens zwei thermoplastische Komponenten in einer mehrwelligen Schneckenmaschine mit gleichläufigen, parallelen, sich gleichschnell drehenden Schneckenwellen, wobei die plastische Masse

(i) kein bei 23 °C fließfähiges Additiv aufweist,
oder
(ii) genau ein bei 23 °C fließfähiges Additiv aufweist,
oder
(iii) mindestens zwei bei 23 °C fließfähige Additive aufweist.

Insbesondere Gegenstand der vorliegenden Erfindung ist dabei die Herstellung einer plastischen Masse aus einer Formulierung enthaltend mindestens zwei thermoplastische Komponenten, von denen mindestens eine ein Polycarbonat ist. Weiter insbesondere ist die Schneckenmaschine ein Doppelschneckenextruder mit gleichläufigen, parallelen, sich gleichschnell drehenden Schneckenwellen.

Mehrwellige Schneckenmaschinen mit gleichläufigen, parallelen, sich gleichschnell drehenden Schneckenwellen sind aus der Fachliteratur hinlänglich bekannt, beispielsweise aus [1] ([1] = Klemens Kohlgrüber: Der gleichläufige Doppelschneckenextruder, 2. Auflage, Hanser Verlag München 2016.

Solche Schneckenmaschinen - auch Extruder genannt - werden unter anderem zur Compoundierung von plastischen oder viskoelastischen Massen, insbesondere Compoundierung von Kunststoffen, wiederum insbesondere zur Compoundierung von Schmelzen oder Lösungen von thermoplastischen Polymeren oder Schmelzen oder Lösungen von Kautschuken, eingesetzt: [1], Seiten 50 bis 63.

Wenn in einer Formulierung zur Herstellung einer plastischen Masse zwei oder mehr unterschiedliche thermoplastische Komponenten enthalten sind, deren Viskosität deutlich voneinander abweicht, ist es schwierig, eine gute Plastifizierung zu erreichen bei gleichzeitig hohem Durchsatz an plastischer Masse durch die Schneckenmaschine und niedrigem Energieeintrag in die plastische Masse.

Dass es schwierig ist, eine gute Plastifizierung zu erreichen, wird beispielsweise in dem Aufsatz "Melting Model for Co-Rotating Twin-Screw Extruders", Elemans, P.H.M. et al., ANTEC 2002, Conference Proceedings, Volume I, Processing, Seiten 355 bis 359, beschrieben. Als Lösung wird hier vorgeschlagen, die Granulatgröße der eingesetzten thermoplastischen Komponente deutlich zu verringern, um eine gute Plastifizierung zu erhalten. Hier werden allerdings lediglich Formulierungen mit nur einer thermoplastischen Komponente, Arnitel® 40D, eingesetzt und betrachtet.

Aus den dargestellten Ergebnissen lässt sich keine Handlungsanweisung entnehmen, um aus Polycarbonat enthaltenden Formulierungen mit mindestens zwei thermoplastischen Komponenten eine plastische Masse mit guter Plastifizierung herzustellen. Weiterhin ist eine Verringerung der Granulatgröße der eingesetzten thermoplastischen Komponenten schwierig zu realisieren, da die thermoplastischen Komponenten der Formulierung in der Regel nicht selbst hergestellt sondern von externen Herstellern käuflich erworben werden.

In den Aufsätzen "Melting of polymer blends in co-rotating twin screw extruders. Part I, Part II, Part III", Potente, H. et al., Int. Polymer Processing XVI (2001) 2, Seiten 124-130, 131-142 und 143-150 wird ausgehend von einer Literaturrecherche und Experimenten ein Modell zur Berechnung der Güte der Plastifizierung für thermoplastische Komponenten vorgestellt, welches in der Simulationssoftware SIGMA implementiert ist. Die Experimente zur Verifizierung des Modells werden mit einer Mischung der thermoplastischen Komponenten PA6 und PP durchgeführt. Die Bilder 12-14 auf den Seiten 149 und 150 zeigen allerdings, dass die Übereinstimmung zwischen Experimenten und Berechnung sehr gering ist. Weiterhin wird auf Basis der Experimente beschrieben, dass die Granulatgrößen der eingesetzten thermoplastischen Komponenten sowie das Verhältnis der Granulatgrößen der eingesetzten thermoplastischen Komponenten und der Gangtiefe der Schneckenelemente signifikante verfahrensspezifische Stellgrößen sind, um ein gute Plastifizierung zu erreichen. Der Einfluss der Granulatgröße wird nur theoretisch diskutiert; Experimente mit verschiedenen Granulatgrößen werden nicht gezeigt. Weiterhin wird das Viskositätsverhältnis der thermoplastischen Komponenten als entscheidend für eine gute Plastifizierung genannt. Allerdings werden nur qualitative Aussagen getroffen.

Da das Modell nur eine geringe Übereinstimmung mit den Ergebnissen der Experimente besitzt, lässt sich daraus keine Handlungsanweisung entnehmen, um aus Formulierungen mit mindestens zwei thermoplastischen Komponenten, von denen mindestens eine ein Polycarbonat ist, eine plastische Masse mit guter Plastifizierung herzustellen.

Im Aufsatz "Evaluation of melting performance of a co-rotating twin-screw extruder", Elemans, P.H.M. et al., ANTEC 2002, Conference Proceedings, Volume I, Processing, Seiten 350-354 wird anhand von Experimenten mit einer Formulierung aus einer thermoplastischen Komponente gezeigt, dass die Güte der Plastifizierung linear mit der Verweilzeit im Extruder zunimmt und zusätzlich signifikant von der Schneckendrehzahl abhängt. Es bleibt allerdings unklar,

mit welchem Durchsatz die Experimente durchgeführt wurden. Es wird lediglich ein einzustellendes Drehmoment als Prozentangabe genannt, wobei jedoch die Information fehlt, welches Drehmoment in Nm einem Drehmoment von 100% entspricht. Alle Experimente wurden mit Formulierungen durchgeführt, welche lediglich Arnitel® 40D als einzige thermoplastische Komponente enthalten.

Da nur eine Formulierung mit einer thermoplastischen Komponente untersucht wurde und die Versuchseinstellungen nicht nachvollziehbar sind, lässt sich keine Handlungsanweisung entnehmen, wie aus Formulierungen mit mindestens zwei thermoplastischen Komponenten, von denen mindestens eine ein Polycarbonat ist, eine plastische Masse mit guter Plastifizierung herzustellen wäre.

Im Aufsatz "Melting of high-heat Polyamide in a co-rotating twin-screw extruder", Janssen, J.M.H., Sierksma, W.R., ANTEC 2002, Conference Proceedings, Volume III, Special Areas, Seiten 3712-3715, wird anhand von Experimenten mit einer Formulierung aus Polyamid 4.6, Polyamid 4.6 und Polyamid 6 sowie unter Zugabe von nicht näher bezeichneten niedrig schmelzenden Additiven dargestellt, dass ein hoher Energieeintrag, eine niedrige Drehzahl, ein niedriges Drehmoment und eine lange und schmelzegefüllte Knetblockzone die Güte der Plastifizierung verbessern, die Zugabe von Polyamid 6 und/oder niedrig schmelzenden Additiven zum Polyamid 4.6 die Plastifizierung allerdings verschlechtern. Weiterhin wird darauf hingewiesen, dass bei höherer Drehzahl zwar der Energieeintrag steigt, gleichzeitig aber die Güte der Plastifizierung aufgrund ungenügender Verweilzeit im Extruder sinkt.

Aus den dargestellten Ergebnissen lässt sich keine Handlungsanweisung entnehmen, um aus Polycarbonat enthaltenden Formulierungen mit mindestens zwei thermoplastischen Komponenten eine plastische Masse mit guter Plastifizierung herzustellen, da lediglich qualitative Aussagen zum Einfluss der Prozessparameter, des Schneckenbesatzes und zu Formulierungskomponenten getroffen werden. Außerdem wird keine Handlungsanweisung gegeben, mit der eine gute Plastifizierung bei gleichzeitig hoher Wirtschaftlichkeit erreicht werden kann. Die Reduzierung der Drehzahl und des Drehmomentes führen unweigerlich zu einem geringeren Durchsatz und damit einer niedrigen Wirtschaftlichkeit.

Im Stand der Technik findet sich außerdem kein Hinweis darauf, wie die Größen, die die Güte der Plastifizierung beeinflussen, möglichst so miteinander verknüpft werden können, dass eine gute Plastifizierung auch dann erreicht werden kann, wenn eine oder mehrere dieser Einflussgrößen nicht verändert werden kann bzw. können oder nicht verändert werden soll bzw. sollen, beispielsweise aus Kosten- oder Qualitätsgründen, indem eine oder mehrere der anderen Einflussgrößen in geeigneter Weise verändert wird bzw. werden.

Aufgabe der vorliegenden Erfindung ist es daher, ein Verfahren zur Herstellung einer plastischen Masse mit einer guten Plastifizierung in einer mehrwelligen Schneckenmaschine mit gleichläufigen, parallelen, sich gleichschnell drehenden Schneckenwellen zur Verfügung zu stellen, bei dem die Einflussgrößen, die die Güte der Plastifizierung beeinflussen, so eingestellt sind, dass eine gute Plastifizierung erreicht wird. Weiter Aufgabe der vorliegenden Erfindung ist es, ein Verfahren zur Herstellung einer plastischen Masse mit einer guten Plastifizierung in einer mehrwelligen Schneckenmaschine mit gleichläufigen, parallelen, sich gleichschnell drehenden Schneckenwellen zur Verfügung zu stellen, bei dem die Einflussgrößen, die die Güte der Plastifizierung beeinflussen, so eingestellt werden können, dass eine gute Plastifizierung auch dann erreicht wird, wenn mindestens eine dieser Einflussgrößen nicht verändert werden kann oder nicht verändert werden soll, indem eine oder mehrere der anderen Einflussgrößen in geeigneter Weise verändert werden. Somit soll durch das erfindungsgemäße Verfahren die gute Plastifizierung möglichst unabhängig erreicht werden von der eingesetzten Schneckenmaschine, deren Schneckenbesatz, deren Durchmesser, deren Wellenanzahl, den Komponenten der Formulierung zur Herstellung der plastischen Masse, und den Verfahrensparametern wie beispielsweise Drehzahl der Schneckenwellen und Massenstrom der plastischen Masse durch die Schneckenmaschine. Insbesondere soll die Formulierung, aus der die plastische Masse hergestellt wird, mindestens zwei thermoplastischen Komponenten enthalten, von denen mindestens eine ein Polycarbonat ist.

Eine gute Plastifizierung im Sinne der vorliegenden Erfindung zeichnet sich dadurch aus, dass sich in höchstens 5 % der Anzahl der aus der plastischen Masse erzeugten Granulate, insbesondere in höchstens 3 % der Anzahl der aus der plastischen Masse erzeugten Granulate, ganz insbesondere in höchstens 2 % der Anzahl der aus der plastischen Masse erzeugten Granulate, weiter insbesondere in keinem der aus der plastischen Masse erzeugten Granulate, ganz oder teilweise unaufgeschmolzene Partikel der in der Formulierung enthaltenen thermoplastischen Komponenten befinden. Eine Anzahl von mehr als 2 %, insbesondere eine Anzahl von mehr als 3 %, ganz insbesondere eine Anzahl von mehr als 5 % an Granulaten, in denen sich ganz oder teilweise unaufgeschmolzene Partikeln befinden, ist unakzeptabel.

Überraschenderweise wurde gefunden, dass die Aufgabe durch ein Verfahren mit den Merkmalen des Hauptanspruchs gelöst wird.

Insbesondere wurde gefunden, dass eine gute Plastifizierung dann erreicht wird, wenn eine sogenannte Aufschmelzzahl in einem bestimmten Wertebereich gehalten wird. Bei dieser Aufschmelzzahl handelt es sich um eine dimensionslose Kennzahl.

Weiter insbesondere wurde gefunden, dass eine gute Plastifizierung dann erreicht wird, wenn die Aufschmelzzahl in dem Längenabschnitt der Schneckenmaschine, der in einem Abstand von zweimal dem Gehäuseinnendurchmesser D vor dem ersten Schneckenelement beginnt, das kein Förderelement ist, und mit dem letzten Schneckenelement der Schneckenmaschine endet von 1,18 bis 8 beträgt, bevorzugt von 1,18 bis 5 beträgt, besonders bevorzugt von 1,2 bis 3 beträgt,

wobei für diese Aufschmelzzahl gilt:

$$Aufschmelzzahl = \frac{(\tau_1 \cdot \delta\eta_1 + \tau_2 \cdot \delta\eta_2) \cdot \lambda \cdot n \cdot D^3}{d^2 \cdot c_p \cdot \dot{m}}$$

und wobei gilt:

$\tau_1$ ist die mittlere Verweilzeit der plastischen Masse in dem Längenabschnitt der Schneckenmaschine, der in einem Abstand von zweimal dem Gehäuseinnendurchmesser D vor dem ersten Schneckenelement beginnt, das kein Förderelement ist,
und
im Fall (i)
mit dem letzten Schneckenelement der Schneckenmaschine endet,
und in den Fällen (ii) oder (iii)
mit der ersten Zugabestelle eines bei 23 °C fließfähigen Additivs stromabwärts vom ersten Schneckenelement, das kein Förderelement ist, endet,
und wobei gilt, dass
$\delta\eta_1$ ist das Verhältnis der dynamischen Viskosität der plastischen Masse bei einer Schergeschwindigkeit $\dot{\Upsilon}$ entsprechend der Drehzahl n der Schneckenwellen und

im Fall (i)
einer Temperatur der plastischen Masse von 230 °C
und
im Fall (ii)
einer Temperatur der plastischen Masse von 230 °C minus 230 °C multipliziert mit dem doppelten auf die Masse der plastischen Masse bezogenen Masse-Anteil des genau einen bei 23 °C fließfähigen Additivs,
und
im Fall (iii)
einer Temperatur der plastischen Masse von 230 °C minus (230 °C multipliziert mit dem doppelten auf die gesamte Masse der plastischen Masse bezogenen Summe der Masse-Anteile der mindestens zwei bei 23 °C fließfähigen Additive)

bezogen auf die dynamische Viskosität der thermoplastischen Komponente mit der höchsten dynamischen Viskosität gemessen bei einer Schergeschwindigkeit $\dot{\Upsilon}$ von 200 1/s und

im Fall (i)
bei einer Temperatur von 230 °C
und
im Fall (ii)
bei einer Temperatur von 230 °C minus 230 °C multipliziert mit dem doppelten auf die Masse der plastischen Masse bezogenen Masse-Anteils des genau einen bei 23 °C fließfähigen Additivs,
und
im Fall (iii)
bei einer Temperatur von 230 °C minus (230 °C multipliziert mit dem doppelten auf die Masse der plastischen Masse bezogenen Summe der Masse-Anteile der mindestens zwei bei 23 °C fließfähigen Additive),

$\tau_2$ ist

im Fall (ii) und im Fall (iii)
die mittlere Verweilzeit der plastischen Masse in dem Längenabschnitt der Schneckenmaschine, der mit der ersten Zugabestelle eines bei 23 °C fließfähigen Additivs stromabwärts in einem Abstand von zweimal dem inneren Gehäuseinnendurchmesser D vor dem ersten Schneckenelement beginnt, das kein Förderelement ist, und mit dem letzten Schneckenelement der Schneckenmaschine endet,

und
im Fall (i)
gleich Null,

$\delta\eta_2$ ist das Verhältnis der dynamischen Viskosität der plastischen Masse bei einer Schergeschwindigkeit $\dot{\Upsilon}$ entsprechend der Drehzahl n der Schneckenwellen und bei einer Temperatur entsprechend der Temperatur der plastischen Masse am Ende des letzten Schneckenelements bezogen auf die dynamische Viskosität der thermoplastischen Komponente mit der höchsten dynamischen Viskosität gemessen bei einer Schergeschwindigkeit von 200 1/s und einer Temperatur entsprechend der Temperatur der plastischen Masse am Ende des letzten Schneckenelements,
$\lambda$ ist die Wärmeleitfähigkeit gemessen nach EN ISO 11357-8:2021 bei 23 °C, die die plastischen Masse unmittelbar nach dem Austritt aus der Schneckenmaschine aufweist,
**n** ist die Drehzahl der Schneckenwellen der Schneckenmaschine,
**d** ist der Durchmesser der Granulate des in der Formulierung zur Herstellung der plastischen Masse enthaltenen Polycarbonats mit der höchsten relativen Viskosität gemessen nach EN ISO 1628-1:2021,
**D** ist der innere Durchmesser der Gehäuse der Schneckenmaschine, wobei der Gehäuseinnendurchmesser D dabei für alle Gehäuse der Schneckenmaschine gleich ist.
$c_p$ ist die mittlere spezifische Wärmekapazität gemessen nach ISO 11357-4:2021 im Temperaturbereich zwischen 250 °C und 300 °C,
$\dot{m}$ ist der Massenstrom der plastischen Masse in der Schneckenmaschine.

Dies gilt insbesondere für ein:

Verfahren zur Herstellung einer plastischen Masse
in einer mehrwelligen Schneckenmaschine mit gleichläufigen, parallelen, sich gleichschnell drehenden Schneckenwellen,
wobei sich die Schneckenwellen mit einer Drehzahl n drehen,
wobei die plastische Masse aus einer Formulierung enthaltend mindestens zwei thermoplastische Komponenten hergestellt wird,
wobei es sich bei mindestens einer der mindestens zwei thermoplastischen Komponenten um ein Polycarbonat handelt,
wobei die plastische Masse

(i) kein bei 23 °C fließfähiges Additiv aufweist,
oder
(ii) genau ein bei 23 °C fließfähiges Additiv aufweist,
oder
(iii) mindestens zwei bei 23 °C fließfähige Additive aufweist,

wobei die dynamische Viskosität der plastischen Masse gemessen nach ISO 11443:2014 Methode A2 bei einer Schergeschwindigkeit $\dot{\Upsilon}$ von 200 1/s
und

im Fall (i)
einer Temperatur von 230 °C
und
im Fall (ii)
einer Temperatur von 230 °C minus 230 °C multipliziert mit dem doppelten auf die Masse der plastischen Masse bezogenen Masse-Anteils des genau einen bei 23 °C fließfähigen Additivs,
und
im Fall (iii)
einer Temperatur von 230 °C minus 23 0 °C multipliziert mit dem doppelten auf die Masse der plastischen Masse bezogenen Summe der Masse-Anteile der mindestens zwei bei 23 °C fließfähigen Additive,

bezogen auf die Viskosität von mindestens einer dieser thermoplastischen Komponenten gemessen nach ISO 11443:2014 Methode A2, gemessen bei einer Schergeschwindigkeit $\dot{\Upsilon}$ von 200 1/s und einer Temperatur von 230 °C, in einem Verhältnis von 0,3 bis 3 steht,
und wobei die mindestens zwei thermoplastischen Komponenten sich in mindestens einem der folgenden Merkmale

unterscheiden:

mindestens eine Struktureinheit ist unterschiedlich,
oder
der Unterschied in der relativen Lösungsviskosität, gemessen nach EN ISO 1628-1:2021, beträgt mindestens 5 %,
wobei das Verfahren durch eine Aufschmelzzahl gekennzeichnet ist.

Zur weiteren Erläuterung sei angemerkt:
Die Drehzahl n ist dabei die Anzahl von Umdrehungen in einer Zeitspanne bezogen auf diese Zeitspanne und entspricht dem Kehrwert der Umlaufdauer T, also **n=1/T.**

Der Unterschied in der relativen Lösungsviskosität, gemessen nach EN ISO 1628-1:2021, wird bestimmt in Dichlormethan bei einer Konzentration von 5 g Probe pro Liter Dichlormethan bei 25 °C mit einem Ubbelohdeviskosimeter.

$\delta\eta_1$ ist das Verhältnis der dynamischen Viskosität der plastischen Masse bei einer Schergeschwindigkeit $\dot{\Upsilon}$ entsprechend der Drehzahl n der Schneckenwellen. Die vereinfachende Gleichsetzung ist möglich, da sich die Schergeschwindigkeit proportional zur Drehzahl verhält.

d ist der Durchmesser der Granulate des in der Formulierung zur Herstellung der plastischen Masse enthaltenen Polycarbonats mit der höchsten relativen Viskosität, gemessen nach EN ISO 1628-1:2021, und wurde als äquivalenter Kugeldurchmesser aus dem Gewicht von 100 Granulaten sowie der Feststoffdichte wie folgt berechnet:

$$d = \left(\frac{6 \cdot m_{100}}{\rho_{Feststoff} \cdot \pi}\right)^{\frac{1}{3}}$$

wobei:

**$m_{100}$** ist das Gewicht von 100 Granulaten des in der Formulierung zur Herstellung der plastischen Masse enthaltenen Polycarbonats mit der höchsten relativen Viskosität, gemessen nach EN ISO 1628-1:2021, gemessen mit einer handelsüblichen Waage,

$r_{Feststoff}$ ist die Dichte gemessen nach EN ISO 1183-1:2019 (Verfahren A) des in der Formulierung zur Herstellung der plastischen Masse enthaltenen Polycarbonats mit der höchsten relativen Viskosität, gemessen nach EN ISO 1628-1:2021,

p ist die Kreiszahl.

Im Rahmen der vorliegenden Erfindung sind bezogen auf die mehrwellige Schneckenmaschine Angaben zur Lage und Richtung immer in Förderrichtung der gesamten mehrwelligen Schneckenmaschine zu verstehen.

Erfindungsgemäß bevorzugt handelt es sich bei der mehrwelligen Schneckenmaschine um einen Doppelschneckenextruder mit gleichläufigen, parallelen, sich gleichschnell drehenden Schneckenwellen. Die Schneckenwellen sind dabei mit Schneckenelementen besetzt, die jeweils gegenüber den jeweils unmittelbar benachbarten Schneckenelementen der jeweils unmittelbar benachbarten Schneckenwellen bevorzugt dicht kämmend sind. Nach außen sind diese Schneckenwellen umfasst von einem äußeren Gehäuse, dessen innere Kontur ebenfalls den Schneckenwellen angepasst ist. Das Gehäuse des Doppelschneckenextruders mit zueinander parallel angeordneten Schneckenwellen kann sowohl beheizbar als auch kühlbar ausgeführt sein.

Alternativ erfindungsgemäß bevorzugt handelt es sich bei der mehrwelligen Schneckenmaschine um einen Mehrwellenextruder mit zueinander ringförmig angeordneten, gleichläufigen, parallelen, sich gleichschnell drehenden Schneckenwellen. Ein solcher Mehrwellenextruder weist 8 bis 16, meist 10 oder 12 gleichsinnig drehende Schneckenwellen auf. Auch bei einer solchen Schneckenmaschine sind Schneckenwellen mit Schneckenelementen besetzt, die jeweils gegenüber den jeweils unmittelbar benachbarten Schneckenelementen der jeweils unmittelbar benachbarten Schneckenwellen bevorzugt dicht kämmend sind. Die Schneckenwellen sind dabei ringförmig um einen inneren Kern mit einer den mit den Schneckenelementen besetzten Schneckenwellen angepasster Kontur angeordnet. Jede Schneckenwelle ist dabei zwei anderen Schneckenwellen unmittelbar benachbart. Nach außen sind diese Schneckenwellen umfasst von einem äußeren Gehäuse, dessen innere Kontur ebenfalls den Schneckenwellen angepasst ist. Das Gehäuse und/oder der Kern des Mehrwellenextruders mit zueinander ringförmig angeordneten Schneckenwellen können sowohl beheizbar als auch kühlbar ausgeführt sein.

Im Sinne der vorliegenden Erfindung wird ein solcher Mehrwellenextruder mit zueinander ringförmig angeordneten Schneckenwellen nachfolgend auch Ringextruder genannt.

Die Schneckenelemente eines Ringextruders unterscheiden sich nicht von denen eines Doppelschneckenextruders, der vor die gleiche verfahrenstechnische Aufgabe gestellt wird. Auch unterscheiden sich die Verfahrenszonen eines Ringextruders nicht von denen eines Doppelschneckenextruders, der vor die gleiche verfahrenstechnische Aufgabe gestellt wird.

Ringextruder an und für sich sind beispielsweise bekannt aus:
DE4412725A1, DE4412741A1, DE19622582A1, DE202007004997U1, DE202007005010U1, WO03020493A1 und WO2006045412A2 sowie aus der Veröffentlichung "Compoundieren mit zwölf Wellen" Carl Hanser Verlag, München, KU Kunststoffe, Jahrgang 90 (2000) 8, Seiten 60 bis 62.

Bei der nach dem erfindungsgemäßen Verfahren hergestellten plastischen Masse handelt es sich insbesondere um eine Schmelze einer Formulierung enthaltend mindestens zwei thermoplastische Komponenten, von denen mindestens eine ein Polycarbonat ist. Auch die zweite thermoplastische Komponente kann ein Polycarbonat sein, sie kann aber auch ein anderes thermoplastisches Polymer sein. Entsprechend verhält es sich mit möglicherweise weiteren eingesetzten thermoplastischen Komponenten. Jede weitere dieser möglicherweise weiteren eingesetzten thermoplastischen Komponenten kann unabhängig von der anderen ein Polycarbonat oder ein anderes thermoplastisches Polymer sein. So können auch alle thermoplastischen Komponenten der erfindungsgemäßen Formulierung Polycarbonate sein.

Im Sinne der vorliegenden Erfindung liegt eine Formulierung vom Einzug der mehrwelligen Schneckenmaschine bis zu einem Abstand von zweimal dem Gehäuseinnendurchmesser vor dem ersten Schneckenelement, das kein Förderelement ist, vor; nach dem ersten Schneckenelement, das kein Förderelement ist, liegt eine plastische Masse vor. In dem Längenabschnitt der mehrwelligen Schneckenmaschine, der von den Förderelementen ab einem Abstand von zweimal dem Gehäuseinnendurchmesser bis unmittelbar zum Ende des ersten Schneckenelements, das kein Förderelement ist, überstrichen wird, wird die Formulierung in die plastische Masse umgewandelt.

Im Sinne der vorliegenden Erfindung werden unter "Polycarbonat" sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch bevorzugt aromatische Dicarbonsäureester-Gruppen ersetzt sein. Derartige Polycarbonate, die sowohl Säurereste der Kohlensäure als auch Säurereste von, bevorzugt aromatischen Dicarbonsäuren in die Molekülkette eingebaut enthalten, werden als aromatische Polyestercarbonate bezeichnet.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen Polyestercarbonate haben mittlere Molekulargewichte Mw bestimmt durch GPC (Gelpermeationschromatographie in Methylenchlorid mit Polycarbonat als Standard) von 15 kg/mol bis 50 kg/mol, bevorzugt von 20 kg/mol bis 35 kg/mol, besonders bevorzugt von 23 kg/mol bis 33 kg /mol.

Die Herstellung der bevorzugten aromatischen Polycarbonate und aromatischen Polyestercarbonate erfolgt in bekannter Weise aus Diphenolen, Kohlensäure oder Kohlensäurederivaten und, im Falle der Polyestercarbonate, bevorzugt aromatischen Dicarbonsäuren oder Dicarbonsäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate und Polyestercarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Diphenolen mit beispielsweise Diphenylcarbonat möglich.

Für die Herstellung von Polycarbonaten geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

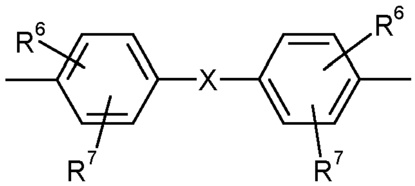

(2),

in der

R6 und R7 unabhängig voneinander für H, C1- bis C18-Alkyl-, C1- bis C18-Alkoxy, Halogen wie Cl oder Br oder für jeweils gegebenenfalls substituiertes Aryl- oder Aralkyl, bevorzugt für H oder C1 bis C12 Alkyl, besonders bevorzugt für H oder C1- bis C8-Alkyl und ganz besonders bevorzugt für H oder Methyl stehen, und
X für eine Einfachbindung, -SO2-, -CO-, -O-, -S-, C1- bis C6-Alkylen, C2- bis C5-Alkyliden oder C5- bis C6 Cycloalkyliden, welches mit C1- bis C6-Alkyl, vorzugsweise Methyl oder Ethyl, substituiert sein kann, ferner für C6- bis C12-Arylen, welches gegebenenfalls mit weiteren Heteroatome enthaltenden aromatischen Ringen kondensiert sein kann, steht.

Bevorzugt steht X für eine Einfachbindung, C1- bis C5-Alkylen, C2- bis C5-Alkyliden, C5- bis C6-Cycloalkyliden, -O-, -SO-, -CO-, -S-, -SO2-
oder für einen Rest der Formel (2a)

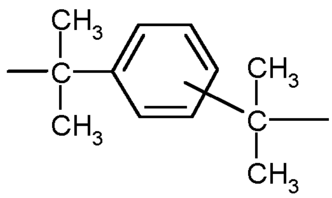

(2a).

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Bisphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Bisphenole der Formeln (IV) bis (VI)

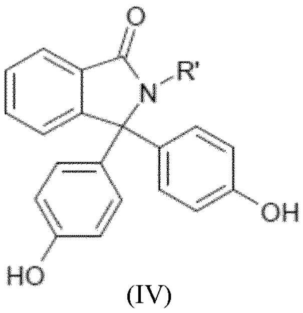
(IV)

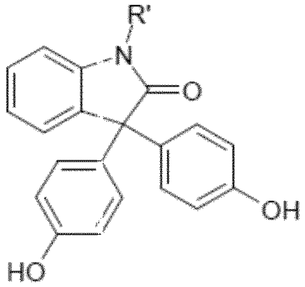
(V)

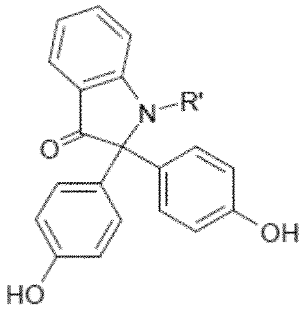
(VI)

in denen R' jeweils für $C_1$-$C_4$-Alkyl, Aralkyl oder Aryl, bevorzugt für Methyl oder Phenyl steht.

Besonders bevorzugte Bisphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)) und die Dihydroxyverbindungen der Formeln (IV), (V) und (VI), in denen R' jeweils für $C_1$-$C_4$-Alkyl, Aralkyl oder Aryl, bevorzugt für Methyl oder Phenyl steht.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP A 105550/1986 beschrieben.

Im Fall der Homopolycarbonate wird nur ein Diphenol eingesetzt, im Fall der Copolycarbonate werden mehrere Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Insbesondere sind die erfindungsgemäßen Polycarbonate nur aus Atomen ausgewählt aus einem oder mehreren der Elemente Kohlenstoff (C), Wasserstoff (H), Sauerstoff (O), Stickstoff (N), Schwefel (S), Chlor (Cl) und Brom (Br) aufgebaut.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methylbenzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis des Monomers Bisphenol A einerseits und einem Monomer ausgewählt aus der Gruppe umfassend 1,1-Bis-(4-hydroxyphenyl)-3,3,5-trimethylcyclohexan und die Bisphenole der Formeln (IV) bis (VI)

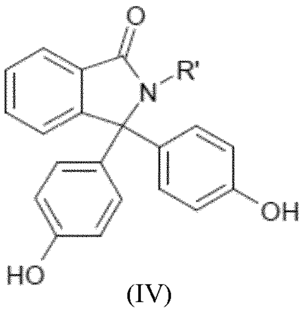
(IV)

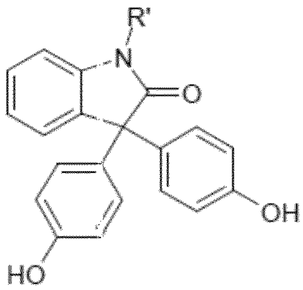
(V)

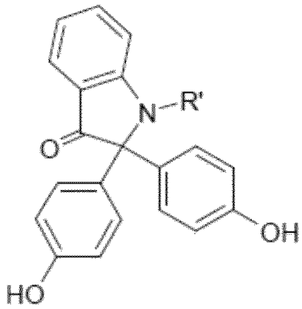
(VI)

in denen R' jeweils für $C_1$-$C_4$-Alkyl, Aralkyl oder Aryl, bevorzugt für Methyl oder Phenyl steht, andererseits.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Am meisten bevorzugt als Polycarbonat ist aromatisches Polycarbonat auf Basis von Bisphenol A, insbesondere eine lineares aromatisches Polycarbonat auf Basis von Bisphenol A.

Dabei beträgt der Anteil an Polycarbonat in der Formulierung zur Herstellung der plastischen Masse von 20 bis 98 Gew.-%, insbesondere 40 bis 80 Gew.-%.

Sofern eine thermoplastische Komponente der mindestens zwei thermoplastischen Komponenten der erfindungsgemäßen Formulierung kein Polycarbonat ist oder möglicherweise weitere thermoplastische Komponenten der erfindungsgemäßen Formulierung keine Polycarbonate sind, ist die weitere thermoplastische Komponente oder sind die möglicherweise weiteren thermoplastischen Komponenten unabhängig voneinander ausgewählt aus der Gruppe umfassend die Mitglieder: Polyestercarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinyliden-fluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, kautschukmodifizierte Vinyl(co)polymerisate und Polyvinylchlorid.

Sofern die Formulierung als thermoplastische Komponente eine solche thermoplastische Komponente oder mehrere thermoplastische Komponenten enthält, die kein Polycarbonat ist bzw. die keine Polycarbonate sind, ist diese thermoplastische Komponente bzw. sind diese thermoplastischen Komponenten erfindungsgemäß bevorzugt ausgewählt aus der Gruppe der kautschukmodifizierten Vinyl(co)polymerisate.

In anderen Worten: in einer besonderen Ausführungsform der vorliegenden Erfindung enthält die Formulierung zur Herstellung der plastischen Masse neben mindestens einer thermoplastischen Komponente, die ein Polycarbonat ist, in diesem Zusammenhang häufig auch als Komponente A bezeichnet, mindestens eine thermoplastische Komponente, die ein kautschukmodifiziertes Vinyl(co)polymerisat, hier auch Komponente B genannt, ist.

Die erfindungsgemäß bevorzugt eingesetzten kautschukmodifizierten Vinyl(co)polymerisate enthalten kautschukbasierte Pfropfpolymerisate und optional kautschukfreie Vinyl(co)polymerisate.

Die erfindungsgemäß in Komponente B zum Einsatz kommenden Pfropfpolymerisate umfassen

B.1 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren,

B.2 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen $< -50°C$, weiter bevorzugt von $< -60°C$, besonders bevorzugt $< -70°C$.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfgrundlage B.2 hat im Allgemeinen eine mittlere Teilchengröße (D50-Wert) von 0,05 bis 10,00 $\mu$m, vorzugsweise von 0,1 bis 5,0 $\mu$m und besonders bevorzugt von 0,2 bis 1,5 $\mu$m.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B.1 sind vorzugsweise Gemische aus:

B.1.1 65 bis 85 Gew.-%, besonders bevorzugt 70 bis 80 Gew.-%, weiter bevorzugt 74 bis 78 Gew.-%, jeweils bezogen auf die Summe aus B.1.1 und B.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und

B.1.2 15 bis 35 Gew.-%, besonders bevorzugt 20 bis 30 Gew.-%, weiter bevorzugt 22 bis 26 Gew.-%, jeweils bezogen auf die Summe aus B.1.1 und B.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril. Alternativ bevorzugte Monomere sind B.1.1 Methylmethacrylat und B.1.2 Methylmethacrylat.

Als Pfropfgrundlage B.2 der Pfropfpolymerisate eignen sich beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetat- sowie Acrylat-Silikon-Komposit-Kautschuke.

Bevorzugte Pfropfgrundlagen B.1.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B.1.1 und B.1.2) oder Gemische aus einer oder mehrerer der zuvor genannten Komponenten.

Besonders bevorzugt ist als Pfropfgrundlage B.2 reiner Polybutadienkautschuk. In einer weiteren bevorzugten Ausführungsform handelt es sich bei B.2 um Styrol-Butadien- Kautschuk, besonders bevorzugt um Styrol-Butadien-Blockcopolymer-Kautschuk.

Der Gelanteil der Pfropfgrundlage B.2 beträgt mindestens 30 Gew. %, vorzugsweise mindestens 40 Gew.-%, insbesondere mindestens 60 Gew.-%, jeweils bezogen auf B.2 und gemessen als unlöslicher Anteil in Toluol.

Der Gelgehalt der Pfropfgrundlage B.2 bzw. der Pfropfpolymere in Komponente B wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Geeignete Polymerisate gemäß Komponente B sind beispielsweise ABS- oder MBS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate in Komponente B werden durch radikalische Polymerisation, z.B. durch Emulsions-, Suspensions-, Lösungs- oder Massepolymerisation hergestellt. Als Komponente B können auch Mischungen von in unterschiedlichen Verfahren hergestellten Pfropfpolymerisaten verwendet werden.

Wenn die Pfropfpolymerisate B in Emulsions-Polymerisation hergestellt werden, so umfassen diese

B.1 5 bis 75 Gew.-%, bevorzugt 20 bis 60 Gew.-%, besonders bevorzugt 25 bis 50 Gew.-%, bezogen auf das Pfropfpolymerisat, wenigstens eines Vinylmonomeren,

B.2 95 bis 25 Gew.-%, bevorzugt 80 bis 40 Gew.-%, besonders bevorzugt 75 bis 50 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Pfropfgrundlage B.2 von in Emulsions-Polymerisation hergestellten Pfropfpolymerisaten B haben eine mittlere Teilchengröße (D50-Wert) von 0,05 bis 2,00 μm, bevorzugt von 0,1 bis 1,0 μm, besonders bevorzugt von 0,2 bis 0,5 μm.

In Emulsions-Polymerisation hergestellte Pfropfpolymerisate B weisen einen Gelgehalt, gemessen in Aceton als Lösungsmittel, von bevorzugt mindestens 30 Gew.-%, besonders bevorzugt von mindestens 60 Gew.-%, weiter bevorzugt von mindestens 80 Gew.-% auf.

Wenn die Pfropfpolymerisate B in Suspensions-, Lösungs- oder Massepolymerisation hergestellt werden, so umfassen diese:

B.1 80 bis 95 Gew.-%, bevorzugt 84 bis 92 Gew.-%, besonders bevorzugt 87 bis 91 Gew.-%, bezogen auf das Pfropfpolymerisat, wenigstens eines Vinylmonomeren,

B.2 20 bis 5 Gew.-%, bevorzugt 16 bis 8 Gew.-%, besonders bevorzugt 13 bis 9 Gew.-%, bezogen auf das Pfropfpolymerisat, einer oder mehrerer kautschukelastischer Pfropfgrundlagen mit Glasübergangstemperaturen

< -50°C, weiter bevorzugt von < -60°C, besonders bevorzugt < -70°C.

Die Pfropfgrundlage B.2 von in Suspensions-, Lösungs- oder Massepolymerisation hergestellten Pfropfpolymerisaten B haben eine mittlere Teilchengröße (D50-Wert) von 0,3 bis 10,00 μm, bevorzugt von 0,4 bis 5,0 μm, besonders bevorzugt von 0,5 bis 1,5 μm.

In Suspensions-, Lösungs- oder Massepolymerisation hergestellte Pfropfpolymerisate B weisen einen Gelgehalt, gemessen in Aceton als Lösungsmittel, von bevorzugt 10 bis 50 Gew.-%, besonders bevorzugt von 15 bis 40 Gew.-%, weiter bevorzugt von 18 bis 30 Gew.-% auf.

Besonders geeignete im Emulsions-Polymerisationsverfahren hergestellte Pfropfpolymerisate sind beispielsweise ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Weitere besonders geeignete im Emulsions-Polymerisationsverfahren hergestellte Pfropfpolymerisate sind MBS-Modifikatoren mit Kern-Schale-Struktur.

Die Komponente B kann freies, d.h. nicht an die Kautschukgrundlage chemisch gebundenes und nicht in den Kautschukpartikeln eingeschlossenes Vinyl(co)polymerisat bestehend aus den Monomeren gemäß B.1 enthalten. Dieses kann in der Komponente B herstellungsbedingt bei der Polymerisation der Pfropfpolymerisate entstehen (die Pfropfung auf die Pfropfgrundlage ist nicht immer vollständig) oder aber separat polymerisiert und der Komponente B zugemischt werden. Ebenso ist es möglich, dass ein Teil des freien Vinyl(co)polymerisat in Komponente B herstellungsbedingt aus den Pfropfpolymeren selbst stammt und ein anderer Teil separat polymerisiert und der Komponente B zugesetzt wurde. Der Anteil des freien Vinyl(co)polymerisat (unabhängig von dessen Ursprung), gemessen als in Aceton löslicher Anteil, in der Komponente B beträgt, bezogen auf die Komponente B, bevorzugt mindestens 5 Gew.-%, besonders bevorzugt mindestens 30 Gew-%, weiter bevorzugt mindestens 50 Gew.-%.

Dieses freie Vinyl(co)polymerisat weist in den kautschukmodifizierten Vinyl(co)polymerisaten gemäß Komponente B ein gewichtgemitteltes Molekulargewicht $M_w$ 30 bis 250 kg/mol, bevorzugt von 70 bis 200 kg/mol, insbesondere von 90 bis 180 kg/mol auf.

Das gewichtsgemittelte Molekulargewicht Mw des freien Vinyl(co)polymerisats in Komponente B wird im Rahmen der vorliegenden Erfindung per Gelpermeationschromatographie (GPC) in Tetrahydrofuran gegen Polystyrol als Standard gemessen.

Die Formulierung zur Herstellung der plastischen Masse kann die mindestens zwei thermoplastischen Komponenten in Reinform oder als Mischungen mit Füll- und Verstärkungsstoffen, wie insbesondere Glasfasern oder Talkum, enthalten.

In einer bevorzugten Ausführungsform wird bzw. werden der Formulierung ein oder mehrere Additive beigemengt. Ein jeweiliges Additiv kann ein Feststoff, eine Flüssigkeit oder eine Lösung sein und dabei - gegebenenfalls soweit vorhanden mit einem weiteren Additiv oder mehreren weiteren Additiven - gemeinsam mit der Formulierung in die mehrwellige Schneckenmaschine gegeben werden oder aber es wird der mehrwelligen Schneckenmaschine - gegebenenfalls soweit vorhanden mit einem weiteren Additiv oder mehreren weiteren Additiven - über einen separaten Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisato-ren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren sein. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern. Geeignete Additive werden beispielsweise beschrieben in: WO 99/55772, S. 15-25, in "Plastics Additives", R. Gächter und H. Müller, Hanser Publishers 1983, in "Additives for Plastics Handbook, John Murphy, Elsevier, Oxford 1999 ", im "Plastics Additives Handbook, Hans Zweifel, Hanser, München 2001".

Erfindungsgemäß bevorzugt kann der plastischen Masse ein bei 23 °C fließfähiges Additiv zugegeben werden, oder es können der plastischen Masse mehrere bei 23 °C fließfähige Additive zugegeben werden, beispielsweise zwei, drei oder vier solcher bei 23 °C fließfähigen Additive.

Erfindungsgemäß besonders bevorzugt als ein bei 23 °C fließfähiges Additiv ist ein phosphorhaltiges Flammschutzmittel.

Phosphorhaltige Flammschutzmittel im erfindungsgemäßen Sinne sind bevorzugt ausgewählt aus den Gruppen der mono- und oligomeren Phosphor- und Phosphonsäureester, Phosphazene sowie Salze der Phosphinsäure, wobei auch Mischungen von mehreren Verbindungen ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Phosphorverbindungen eingesetzt werden.

Bevorzugte mono- und oligomere Phosphor- bzw. Phosphonsäureester sind Phosphorverbindungen der allgemeinen Formel (III)

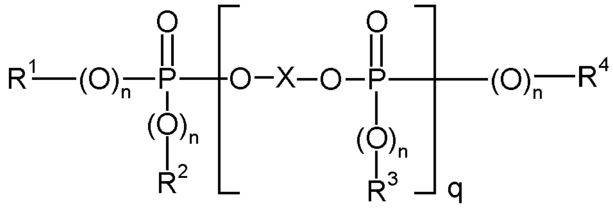

(III)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (III) bedeutet bevorzugt einen ein- oder mehrkernigen aromatischen Rest mit 6 bis 30 C-Atomen. Dieser leitet sich bevorzugt von Diphenolen ab.
n in der Formel (III) kann, unabhängig voneinander, 0 oder 1 sein, vorzugsweise ist n gleich 1.

q steht für Werte von 0 bis 30. Bei Einsatz von Mischungen verschiedener Komponenten der Formel (III) können Mischungen vorzugsweise zahlengemittelte q-Werte von 0,3 bis 10, besonders bevorzugt 0,5 bis 10, insbesondere 1,05 bis 1,4 verwendet werden.

X steht besonders bevorzugt für

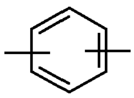 , 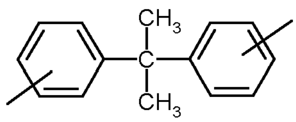 , 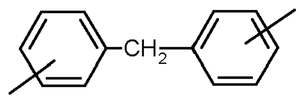 ,

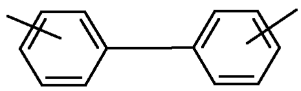

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (III) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Höchst bevorzugt als Komponente D ist Bisphenol-A basierendes Oligophosphat gemäß Formel (IIIa).

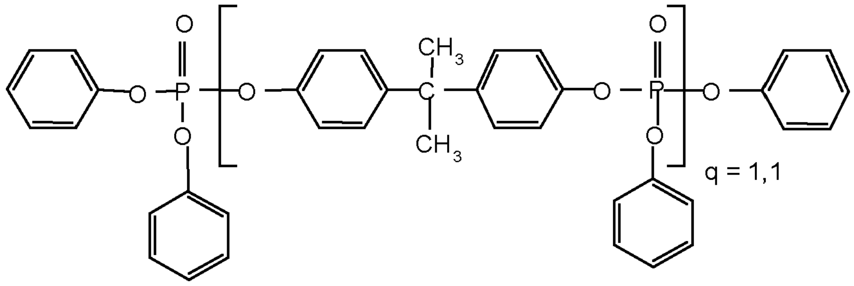

(IIIa)

Die Phosphorverbindungen gemäß Formel (III) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177). Insbesondere ausgewählt aus den Phosphorverbindungen gemäß Formel (III) ist Bisphenol-A-bis(diphenylphosphat), auch kurz BDP genannt. Dieses BDP ist auch als bei 23 °C fließfähiges Additiv bevorzugt.

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphazene sind Verbindungen der Formeln (IVa) und (IVb)

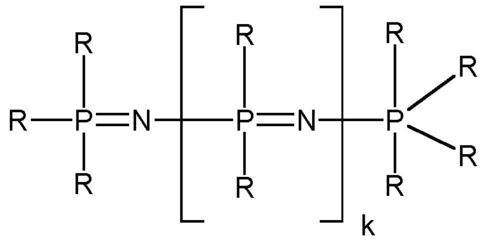

(IVa),

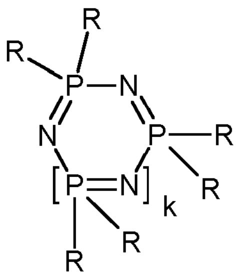

(IVb),

worin

R jeweils gleich oder verschieden ist und für Amino, jeweils gegebenenfalls halogeniertes, vorzugsweise mit Fluor halogeniertes C1 bis C8-Alkyl, oder C1 bis C8-Alkoxy, jeweils gegebenenfalls durch Alkyl, vorzugsweise C1 bis C4-Alkyl, und/oder Halogen, vorzugsweise Chlor und/oder Brom, substituiertes C5 bis C6-Cycloalkyl, C6 bis C20-Aryl, vorzugsweise Phenyl oder Naphthyl, C6 bis C20-Aryloxy, vorzugsweise Phenoxy, Naphthyloxy, oder C7 bis C12-Aralkyl, vorzugsweise Phenyl-C1-C4-alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (IVa) und (IVb) können verschieden sein. Phosphazene und deren Herstellung sind beispielsweise in EP-A 728 811, DE-A 1 961668 und WO 97/40092 beschrieben.

Unter dem Salz einer Phosphinsäure im erfindungsgemäßen Sinne ist das Salz einer Phosphinsäure mit einem beliebigen Metallkation zu verstehen. Es können auch Mischungen von Salzen eingesetzt werden, die sich in Ihrem

Metallkation unterscheiden. Bei den Metallkationen handelt es sich um die Kationen Metalle der 1. Hauptgruppe (Alkalimetalle, vorzugsweise Li+, Na+, K+), der 2. Hauptgruppe (Erdalkalimetalle; vorzugsweise Mg2+, Ca2+, Sr2+, Ba2+, besonders bevorzugt Ca2+) oder der 3. Hauptgruppe (Elemente der Borgruppe; vorzugsweise Al3+) und/oder der 2., 7. oder 8. Nebengruppe (vorzugsweise Zn2+, Mn2+, Fe2+, Fe3+) des Periodensystems ist.

Vorzugsweise wird ein Salz oder eine Mischung von Salzen einer Phosphinsäure der Formel (V) eingesetzt,

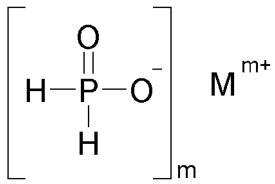

(V)

worin Mm+ ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (V)

für m = 1 die Metallkationen M+ = Li+, Na+, K+,

für m = 2 die Metallkationen M2+ = Mg2+, Ca2+,Sr2+, Ba2+ und

für m = 3 die Metallkationen M3+ = Al3+,

höchst bevorzugt ist Ca2+ (m = 2).

In einer bevorzugten Ausführungsform ist die mittlere Teilchengröße d50 des Phosphinsäuresalzes (Komponente C) kleiner als 80 µm, vorzugsweise kleiner als 60 µm, besonders bevorzugt ist d50 zwischen 10 µm und 55 µm. Die mittlere Teilchengröße d50 ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d50 unterscheiden.

Dieses erfindungsgemäß besonders bevorzugte bei 23 °C fließfähige Additiv wird weiter erfindungsgemäß bevorzugt über einen Seitenstrom ab dem letzten Förderelement vor dem ersten Schneckenelement, das kein Förderelement ist, der plastischen Masse zugegeben. Besonders bevorzugt wird dieses erfindungsgemäß besonders bevorzugte bei 23 °C fließfähige Additiv stromabwärts vom letzten Förderelement vor dem ersten Schneckenelement, das kein Förderelement ist, der plastischen Masse zugegeben. Ganz besonders bevorzugt wird dieses erfindungsgemäß besonders bevorzugte bei 23 °C fließfähige Additiv stromabwärts von der Aufschmelzzone der plastischen Masse zugegeben.

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl) propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide der β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, sterisch gehinderte Amine, Oxamide sowie 2-(Hydroxyphenyl)-1,3,5-triazine bzw substituierte Hydroxyalkoxyphenyl, 1,3,5-triazole, bevorzugt sind substituierte Benzotriazole wie z. B. 2-(2'-hydroxy-5'-methyl-phenyl)-benzotriazol, 2-(2'-hydroxy-3',5'-di-t-butyl-phenyl)benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)benzotriazol, 2-(2'-hydroxy-3',5'-di-tert.-amylphenyl)benzotriazol, 2-[2'-hydroxy-3'-(3",4",5",6"-tetrahydrophthalimido-ehyl)-5'-methylphenyl]-benzotriazol und 2,2'-methylenebis[4-(1,1,3,3-tetramethylbutyl)-6-(2H-benzotriazol-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen der erfindungsgemäßen Formulierung zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen, insbesondere mineralischen, Füllstoffen zugesetzt werden, wobei von diesen mineralischen Füllstoffen auch die Verstärkungsfüllstoffe, insbesondere Titandioxid ($TiO_2$), Talkum ($Mg_3Si_4O_{10}(OH)_2$), Dolomit $CaMg[CO_3]_2$, Kaolinit $Al_4[(OH)_8|Si_4O_{10}]$ und Wollastonit $Ca_3[Si_3O_9]$, ganz insbesondere Titandioxid ($TiO_2$) und Talkum ($Mg_3Si_4O_{10}(OH)_2$) umfasst sind.

Die erfindungsgemäße hergestellte plastische Masse, kann überall dort eingesetzt werden, wo bereits bekannte plastische Massen enthaltend mindestens zwei thermoplastische Komponenten, von denen mindestens eine ein Polycarbonat ist, eingesetzt werden.

Auch Gegenstand der vorliegenden Erfindung ist eine plastische Masse, die nach dem erfindungsgemäßen Verfahren hergestellt wird.

Weiterer Gegenstand der Erfindung ist die Verwendung der erfindungsgemäß hergestellten plastischen Masse zur Herstellung von Formkörpern.

Die erfindungsgemäß hergestellte plastische Masse kann zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper, die aus den erfindungsgemäßen Formulierungen und plastischen Massen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Formulierungen und plastischen Massen eignen sich auch zur Herstellung von folgenden Formkörpern oder Formteilen: Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend wird die Erfindung anhand von Beispielen erläutert, ohne dass die Erfindung dadurch auf diese Beispiele beschränkt werden soll.

## Beispiele

### Bestimmung der mittleren Verweilzeiten $t_1$ und $t_2$

Die mittleren Verweilzeiten $t_1$ und $t_2$ im Extruder wurden wie im Folgenden beschrieben bestimmt.

Zunächst wurden die gewünschte Drehzahl am Extruder eingestellt und dem Extruder alle Formulierungskomponenten an den gewünschten Stellen und mit dem gewünschten Durchsatz zugeführt. 10 Minuten nach der vollständigen Zugabe aller Formulierungskomponenten wurden dem Extruder per Hand als Stoßmarkierung 1 Gramm eines Tracergranulats (Makrolon 2805 in Farbe 901510 [entspricht schwarz]) je 50 kg/h Gesamtdurchsatz der Formulierung zugeführt.

Für die Bestimmung der mittleren Verweilzeit $t_1$ bei Formulierungen ohne bei 23°C fließfähiges Additiv wurde das Tracergranulat in eine Gehäuseöffnung des Extruders zugegeben, welche sich in einem Abstand von zweimal dem

Gehäuseinnendurchmesser (2D) vor dem erstem Schneckenelement, das kein Förderelement ist befindet.

Für die Bestimmung der mittleren Verweilzeit $t_2$ bei Formulierungen mit bei 23°C fließfähiges Additiv wurde das Tracergranulat in eine Gehäuseöffnung des Extruders zugegeben, welche sich achsparallel zur Zugabestelle des bei 23°C fließfähigen Additivs befindet.

Die Verweilzeit $t_1$ bei Formulierungen mit bei 23°C fließfähiges Additiv wurde berechnet aus der Verweilzeit bei Zugabe des Tracergranulats in die Gehäuseöffnung 2D vor dem ersten Schneckenelement, das kein Förderelement ist minus der Verweilzeit bei Zugabe des Tracers in die Gehäuseöffnung achsparallel zur Zugabestelle des bei 23°C fließfähiges Additivs.

Gleichzeitig mit der Zugabe des Tracergranulats wurde die Zeitmessung gestartet.

Mit einem Inline Spektralphotometer (Typ COLVISTEC InSpectro X2) wurde die Intensität des Tracers in der plastischen Masse in einem Flansch unmittelbar nach dem Ende der Extruderwellen gemessen.

Dazu wurde für plastische Massen mit einer gemittelten Transmission von kleiner 40 % im Wellenlängenbereich zwischen 400 nm und 800 nm eine Messsonde im Flansch montiert und die Messung in Reflexion durchgeführt, während für alle anderen plastischen Massen zwei sich gegenüberliegende Messsonden im Flansch platziert wurden und die Messung in Transmission durchgeführt wurde. Die Messsonden waren jeweils mittels Glasfaserleitungen mit einem Spektralphotometer verbunden. Mit dem Spektralphotometer wurde ab Beginn der Tracerzugabe für 5 Minuten sekündlich das Farbspektrum der plastischen Masse zwischen 230 nm und 800 nm gemessen, aufgezeichnet und der L-Wert (Helligkeit; nach CIE LAB) berechnet.

Die mittlere Verweilzeit wurde aus der Summenfunktion der Verteilungskurve für den L-Wert mittels des Auswerteprogramms ReTA der Fa. COLVISTEC berechnet. Für die Bestimmung der mittleren Verweilzeit einer Versuchseinstellung wurde jeweils der Mittelwert aus 3 Messungen gebildet. Es kann aber auch eine andere geeignete Software verwendet werden, um aus der Verteilungskurve für den L-Wert die mittlere Verweilzeit auszurechnen.

## Messung der Schmelzetemperatur

Die Messung der Schmelzetemperatur der plastischen Masse erfolgte bei allen Versuchen durch Einstechen eines Thermoelements in den aus dem Extruder austretenden mittleren Schmelzestrang bzw. bei gerader Anzahl Düsenlöcher in einen der beiden mittleren Schmelzestränge direkt am Austritt aus der Düsenleiste.

## Messung der unaufgeschmolzenen Partikel

Für die Bewertung der Plastifiziergüte wurde für jede Versuchseinstellung bestimmt, wie viele aus jeweils 330 Granulaten, welche zufällig aus der Gesamtzahl der je Versuch erzeugten Granulate ausgewählt wurden, mindestens einen unaufgeschmolzenen Partikel enthalten. Dazu wurden jeweils 110 Granulate auf einem Leuchttisch so aufgestellt, dass ihre Schnittkanten senkrecht zum Leuchttisch ausgerichtet waren. Anschließend wurde eine Rolle aus Pappe mit einem Durchmesser von ca. 4 cm um die Granulate angeordnet. An der Oberseite der Rolle wurde eine Digitalkamera platziert. Belichtung und Fokus wurden an der Kamera so eingestellt, dass die Oberseite der Granulate scharf abgebildet wurde und sich die unaufgeschmolzenen Partikel gut von der plastischen Masse unterschieden. Figur 1 zeigt beispielhaft ein so aufgenommenes Foto.

Die mit der Digitalkamera aufgenommenen Fotos wurden an einem Monitor visuell auf unaufgeschmolzene Partikel in den Granulaten untersucht. Bei der Bildauswertung ist zwischen Vakuolen und unaufgeschmolzenen Partikeln zu unterscheiden. Die unaufgeschmolzenen Partikel unterscheiden sich von Vakuolen in Form und Lage. Während Vakuolen sich in aller Regel im Zentrum des Granulats befinden, findet man die unaufgeschmolzenen Partikel außerhalb des Zentrums. Vakuolen sind in aller Regel oval bis länglich, während unaufgeschmolzene Partikel wesentlich schmaler und meist sichelförmig sind. In Figur 2 werden beispielhaft Vakuolen und unaufgeschmolzene Partikel unterschieden. Mit 2.1.1, 2.1.2, 2.1.3 und 2.1.4 sind Granulate aufweisend Vakuolen bezeichnet, mit 2.1.1.1, 2.1.2.1, 2.1.3.1 und 2.1.4.1 sind die Vakuolen in diesen Granulaten bezeichnet, mit 2.2.1, 2.2.2, 2.2.3 und 2.2.4 sind Granulate aufweisend unaufgeschmolzene Partikel bezeichnet, mit 2.2.1.1, 2.2.1.2, 2.2.2.1, 2.2.2.2, 2.2.3.1, 2.2.3.2, 2.2.4.1 und 2.2.4.2 sind die unaufgeschmolzene Partikel in diesen Granulaten bezeichnet

In Figur 3 sind im Foto aus Figur 1 Granulate mit Vakuolen mit (3.1) bezeichnet und Granulate mit unaufgeschmolzene Partikeln mit (3.2) bezeichnet.

Wenn die Unterscheidung zwischen Vakuolen und unaufgeschmolzenen Partikeln anhand des Digitalfotos nicht möglich war, wurden Granulate einzeln mit dem Auge begutachtet. Hierbei lassen sich unaufgeschmolzene Partikel zweifelsfrei von Vakuolen unterscheiden: während es sich bei Vakuolen immer um Löcher handelt, sind unaufgeschmolzene Partikel durchsichtige Einschlüsse, welche sich über die gesamte Länge des Granulats in Strangabzugsrichtung erstrecken. Hält man die Granulate mit unaufgeschmolzenen Partikeln gegen das Licht, so erkennt man eine Lichtreflexion. Diese Lichtreflexion tritt bei Vakuolen nicht auf, da Vakuolen nur mit Gas gefüllt sind.

Für die Bewertung der Plastifiziergüte wurde die Anzahl Granulate mit mindestens einem unaufgeschmolzenen

Partikel auf die Gesamtanzahl der untersuchten Granulate je Versuchseinstellung bezogen, also 330. Fünf Granulate mit unaufgeschmolzenen Partikeln bedeutet also 5/330 = 1,5 % unaufgeschmolzene Partikel.

**Beispiele 1-6: Variation Prozessparameter Massestrom $\dot{m}$ und Schneckenwellendrehzahl n**

Für die Herstellung der plastischen Masse in den Beispielen 1-6 wurde ein Doppelschneckenextruder ZE60B UTXi der Firma KraussMaffei Extrusion GmbH verwendet. Die baulichen Merkmale des Extruders finden sich in Tabelle 1 in den Spalten k bis n. Den prinzipiellen Aufbau des verwendeten Extruders für die Beispiele 1-6 zeigt Figur 4.

In den Beispielen 1-6 erfolgte die Dosierung aller Komponenten der Formulierung mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, deren Schneckenkonfiguration aus verschiedenen zwei- und dreigängigen Knetblöcken verschiedener Breite sowie Zahnmischelementen besteht.

Im Bereich der Gehäuse 9 bis 10 befindet sich eine Mischzone, deren Schneckenkonfiguration aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 1-6 als Stranggranulierung nach Wasserbadkühlung.

Die Formulierung, die in den Extruder zugeführt wird, besteht bei den Beispielen 1-6 aus einer Mischung aus:

- 60,3 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und

- 17,2 Gew.-% eines Emulsions-ABS-Granulats mit einem A:B:S-Gewichtsverhältnis von 20:24:56 und

- 8,9 Gew.-% eines Masse-ABS-Granulats mit einem A:B:S-Gewichtsverhältnis von 25:10:65 und

- 9,5 Gew.-% eines Styrol-Acrylnitril-Copolymers (SAN) mit einem A:S-Gewichtsverhältnis von 24:76 und

- 4,1 Gew.-% einer Pulvermischung enthaltend 3 Gew.-% eines Emulsions-ABS-Pfropfs in Pulverform mit einem A:B:S-Gewichtsverhältnis von 12:58:30 sowie 0,35 Gew.% Stabilisatoren und 0,75 Gew.-% Entformungsmittel.

In den Vergleichsbeispielen 1 und 2 sowie den erfindungsgemäßen Beispielen 3 bis 6 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Wie die Beispiele 1 - 6 zeigen, wird unabhängig von der gewählten Drehzahl oder dem gewählten Massenstrom für die Formulierung immer eine erfindungsgemäße plastische Masse erhalten, wenn die Aufschmelzzahl (Tabelle 1, Spalte x) mindestens 1,18 beträgt, insbesondere mindestens 1,23 beträgt, während bei einer Aufschmelzzahl kleiner als 1,18, insbesondere bei einer Aufschmelzzahl von 1,08 oder kleiner, die Anzahl der Granulate mit unaufgeschmolzenen Partikeln unakzeptabel ist.

**Beispiele 7 - 19: Variation Viskositätsverhältnisse $dh_1$ und $dh_2$**

Für die Herstellung der plastischen Masse in den Beispielen 7-19 wurde ein Doppelschneckenextruder ZE60B UTXi der Firma KraussMaffei Extrusion GmbH verwendet. Die baulichen Merkmale des Extruders finden sich in Tabelle 1 in den Spalten k bis n. Den prinzipiellen Aufbau des verwendeten Extruders für die Beispiele 7-19 zeigt Figur 4.

In den Beispielen 7-10 erfolgte die Dosierung aller Komponenten der Formulierung mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, deren Schneckenkonfiguration aus verschiedenen zwei- und dreigängigen Knetblöcken verschiedener Breite sowie Zahnmischelementen besteht.

Im Bereich der Gehäuse 9 bis 10 befindet sich eine Mischzone, deren Schneckenkonfiguration aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 7-10 als Stranggranulierung nach Wasserbadkühlung.

Die Formulierung, die in den Extruder zugeführt wird, besteht bei den Beispielen 7-10 aus einer Mischung aus:

- 76 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 3,96 Gew.-% eines Masse-ABS-Granulats mit einem A:B:S-Gewichtsverhältnis von 25:10:65 und
- 24,74 Gew.-% eines Masse-ABS-Granulats mit einem A:B:S-Gewichtsverhältnis von 21:10:69 und
- 2,04 Gew.-% einer Pulvermischung enthaltend 1 Gew.-% eines Emulsions-ABS-Pfropfs in Pulverform mit einem A:B:S-Gewichtsverhältnis von 12:58:30 sowie 0,3 Gew.% Stabilisatoren und 0,74 Gew.-% Entformungsmittel.

Die plastische Masse in den Beispielen 7-10 besitzt die in Tabelle 1, Spalte h angegebene mittlere spezifische Wärmekapazität.

In den Vergleichsbeispielen 7 und 8 sowie den erfindungsgemäßen Beispielen 9 und 10 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

In den Beispielen 11-14 erfolgte die Dosierung aller Komponenten der Formulierung, ausgenommen das bei 23 °C fließfähige Additiv, mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, welche aus verschiedenen zwei- und dreigängigen Knetblöcken verschiedener Breite sowie Zahnmischelementen besteht.

Im Gehäuse 9 wurde das bei 23 °C fließfähige Additiv mittels einer handelsüblichen Membran-Kolbenpumpe (nicht gezeigt) über ein Ventil (nicht gezeigt), welches in eine Bohrung 14 in Gehäuse 9 eingeschraubt war, in die plastische Masse eingespritzt.

Im Bereich der Gehäuse 9 bis 10 befindet sich eine Mischzone, welche aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 11-14 als Stranggranulierung nach Wasserbadkühlung.

Die Formulierung, die in den Extruder zugeführt wird, besteht bei den Beispielen 11-14 aus einer Mischung aus:

- 73 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 4,7 Gew.-% eines Styrol-Acrylnitril-Copolymers (SAN) mit einem A:S-Gewichtsverhältnis von 24:76 und
- 7,7 Gew.-% eines Emulsions-ABS-Pfropfs in Pulverform mit einem A:B:S-Gewichtsverhältnis von 12:58:30 und
- 10 Gew.-% eines bei 23 °C fließfähigen Bisphenol-A basierenden Oligophosphats, insbesondere BDP, und
- 4,6 Gew.-% einer Pulvermischung enthaltend 3 Gew.-% eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) sowie 0,4 Gew.% Stabilisatoren, 0,8 Gew.-% Flammschutzmittel und 0,4 Gew.-% Entformungsmittel.

Die plastische Masse in den Beispielen 11-14 besitzt die in Tabelle 1, Spalte h angegebene mittlere spezifische Wärmekapazität.

Im Vergleichsbeispiel 11 sowie den erfindungsgemäßen Beispielen 12-14 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der

Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

In den Beispielen 15-19 erfolgte die Dosierung aller Komponenten der Formulierung, ausgenommen das bei 23 °C fließfähige Additiv, mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, welche aus verschiedenen zwei- und dreigängigen Knetblöcken verschiedener Breite sowie Zahnmischelementen besteht.

Im Gehäuse 9 wurde das bei 23 °C fließfähige Additiv mittels einer handelsüblichen Membran-Kolbenpumpe (nicht gezeigt) über ein Ventil (nicht gezeigt), welches in eine Bohrung 14 in Gehäuse 9 eingeschraubt war, in die plastische Masse eingespritzt.

Im Bereich der Gehäuse 9 bis 10 befindet sich eine Mischzone, welche aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 15-19 als Stranggranulierung nach Wasserbadkühlung.

Die Formulierung, die in den Extruder zugeführt wird, besteht bei den Beispielen 15-19 aus einer Mischung aus:

- 40,2 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und

- 23,5 Gew.-% eines Granulats eines linearen Polycarbonats auf Basis von Bisphenol A mit einer relativen Viskosität $\eta_{rel}$ = 1.20 (gemessen in $CH_2Cl_2$ als Lösungsmittel bei 25°C und bei einer Konzentration von 0,5 g/100 ml) und

- 7 Gew.-% eines Styrol-Acrylnitril-Copolymers (SAN) mit einem A:S-Gewichtsverhältnis von 24:76 und

- 11 Gew.-% eines Emulsions-ABS-Pfropfs in Pulverform mit einem A:B:S-Gewichtsverhältnis von 12:58:30 und

- 14 Gew.-% eines bei 23 °C fließfähigen Bisphenol-A basierenden Oligophosphats, insbesondere BDP, und

- 4,3 Gew.-% einer Pulvermischung enthaltend 3 Gew.-% eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) sowie 0,1 Gew.% Stabilisatoren, 0,8 Gew.-% Flammschutzmittel und 0,4 Gew.-% Entformungsmittel.

Die plastische Masse in den Beispielen 15-19 besitzt die in Tabelle 1, Spalte h angegebene mittlere spezifische Wärmekapazität.

In den Vergleichsbeispielen 15-17 sowie den erfindungsgemäßen Beispielen 18 und 19 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Wie die Beispiele 1-6, 7-10, 11-14 sowie 15-19 mit jeweils unterschiedlichen Formulierungen zeigen, wird unabhängig von der Formulierung bzw. deren mittlerer spezifischer Wärmekapazität sowie der gewählten Drehzahl oder dem gewählten Massenstrom immer eine erfindungsgemäße plastische Masse erhalten, wenn die Aufschmelzzahl (Tabelle 1, Spalte x) mindestens 1,18 beträgt, insbesondere mindestens 1,20 beträgt, während bei einer Aufschmelzzahl kleiner als 1,18, insbesondere bei einer Aufschmelzzahl von 1,14 oder kleiner, die Anzahl der Granulate mit unaufgeschmolzenen Partikeln unakzeptabel ist.

## Beispiele 20-29: Variation Granulatdurchmesser d

Für die Herstellung der plastischen Masse in den Beispielen 20-29 wurde ein Doppelschneckenextruder ZE60B UTXi der Firma KraussMaffei Extrusion GmbH verwendet. Die baulichen Merkmale des Extruders finden sich in Tabelle 1 in den Spalten k bis n. Den prinzipiellen Aufbau des verwendeten Extruders für die Beispiele 7-19 zeigt Figur 4.

In den Beispielen 20-29 erfolgte die Dosierung aller Komponenten der Formulierung, ausgenommen das bei 23 °C fließfähige Additiv, mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, deren Schneckenkonfiguration aus verschiedenen zwei- und dreigängigen Knetblöcken verschiedener Breite sowie Zahnmischelementen besteht.

Im Gehäuse 9 wurde das bei 23 °C fließfähige Additiv mittels einer handelsüblichen Membran-Kolbenpumpe (nicht gezeigt) über ein Ventil (nicht gezeigt), welches in eine Bohrung 14 in Gehäuse 9 eingeschraubt war, in die plastische Masse eingespritzt.

Im Bereich der Gehäuse 9 bis 10 befindet sich eine Mischzone, deren Schneckenkonfiguration aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 20-29 als Stranggranulierung nach Wasserbadkühlung.

Die Formulierung, die in den Extruder zugeführt wird, besteht bei den Beispielen 20-29 aus einer Mischung aus:

- 40,2 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 23,5 Gew.-% eines Granulats eines linearen Polycarbonats auf Basis von Bisphenol A mit einer relativen Viskosität $\eta_{rel}$ = 1.20 (gemessen in $CH_2Cl_2$ als Lösungsmittel bei 25°C und bei einer Konzentration von 0,5 g/100 ml) und
- 7 Gew.-% eines Styrol-Acrylnitril-Copolymers (SAN) mit einem A:S-Gewichtsverhältnis von 24:76 und
- 11 Gew.-% eines Emulsions-ABS-Pfropfs in Pulverform mit einem A:B:S-Gewichtsverhältnis von 12:58:30 und
- 14 Gew.-% eines bei 23 °C fließfähigen Bisphenol-A basierenden Oligophosphats, insbesondere BDP, und
- 4,3 Gew.-% einer Pulvermischung enthaltend 3 Gew.-% eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) sowie 0,1 Gew.% Stabilisatoren, 0,8 Gew.-% Flammschutzmittel und 0,4 Gew.-% Entformungsmittel.

In den Beispielen 20-29 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

In den Beispielen 20-23 wurde der Granulatdurchmesser der niederviskosen Polycarbonat-Formulierungskomponente im Vergleich zu den Beispielen 15-19 von 3,264 mm bzw. 3,195 mm auf 3,603 mm vergrößert (siehe Tabelle 1, Spalte c.2) während die höherviskose Polycarbonat-Formulierungskomponente unverändert blieb (siehe Tabelle 1, Spalte c.1).

In den Beispielen 24-27 wurde der Granulatdurchmesser der höherviskosen Polycarbonat-Formulierungskomponente im Vergleich zu den Beispielen 15-19 von 3,143 mm bzw. 3,122 mm auf 3,547 mm vergrößert (siehe Tabelle 1, Spalte c.1) während die niederviskose Polycarbonat-Formulierungskomponente unverändert blieb (siehe Tabelle 1, Spalte c.2).

In den Beispielen 28-29 wurde der Granulatdurchmesser der SAN-Formulierungskomponente im Vergleich zu den Beispielen 15-19 von 3,488 mm auf 4,002 mm vergrößert (siehe Tabelle 1, Spalte c.3) während die Polycarbonat-Formulierungskomponenten unverändert blieben (siehe Tabelle 1, Spalte c.1 und c.2).

Der Vergleich der Beispiele 20-23 mit den Beispielen 15-19 zeigt, dass eine Erhöhung des Granulatdurchmessers der niederviskosen Polycarbonat-Formulierungskomponenten keinen Einfluss auf die Plastifiziergüte hat. Bei gleichen Prozessparametern Massenstrom und Schneckenwellendrehzahl resultieren vergleichbare Plastifiziergüten (siehe Tabelle 1, Spalten o, p und w).

Der Vergleich der Beispiele 24-27 mit den Beispielen 15-19 zeigt, dass eine Erhöhung des Granulatdurchmessers der hochviskosen Polycarbonat-Formulierungskomponenten die Plastifiziergüte bei gleichen Prozessparametern Massenstrom und Schneckenwellendrehzahl deutlich verschlechtert (siehe Tabelle 1, Spalten o, p und w).

Der Vergleich der Beispiele 28-29 mit den Beispielen 15-19 zeigt, dass eine Erhöhung des Granulatdurchmessers der SAN-Formulierungskomponente keinen Einfluss auf die Plastifiziergüte hat. Bei gleichen Prozessparametern Massenstrom und Schneckenwellendrehzahl resultieren vergleichbare Plastifiziergüten (siehe Tabelle 1, Spalten o, p und w).

Wie der Vergleich der Beispiele 15-29 zeigt, wird unabhängig vom Granulatdurchmesser sowie der gewählten Drehzahl oder dem gewählten Massenstrom immer eine erfindungsgemäße plastische Masse erhalten, wenn die

Aufschmelzzahl (Tabelle 1, Spalte x) mindestens 1,18 beträgt, insbesondere mindestens 1,36 beträgt, während bei einer Aufschmelzzahl kleiner als 1,18, insbesondere bei einer bei einer Aufschmelzzahl von 1,16 oder kleiner, die Anzahl der Granulate mit unaufgeschmolzenen Partikeln unakzeptabel ist.

**Beispiele 30-33: Variation der Rohstoffe für die gleiche Formulierung**

Für die Herstellung der plastischen Masse in den Beispielen 30-33 wurde ein Doppelschneckenextruder ZE60B UTXi der Firma KraussMaffei Extrusion GmbH verwendet. Die baulichen Merkmale des Extruders finden sich in Tabelle 1 in den Spalten k bis n. Den prinzipiellen Aufbau des verwendeten Extruders für die Beispiele 30-33 zeigt Figur 4.

In den Beispielen 30-33 erfolgte die Dosierung aller Komponenten der Formulierung, ausgenommen das bei 23 °C fließfähige Additiv, mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, welche aus verschiedenen zwei- und dreigängigen Knetblöcken verschiedener Breite sowie Zahnmischelementen besteht.

Im Gehäuse 9 wurde das bei 23 °C fließfähige Additiv mittels einer handelsüblichen Membran-Kolbenpumpe (nicht gezeigt) über ein Ventil (nicht gezeigt), welches in eine Bohrung 14 in Gehäuse 9 eingeschraubt war, in die plastische Masse eingespritzt.

Im Bereich der Gehäuse 9 bis 10 befindet sich eine Mischzone, deren Schneckenkonfiguration aus Knetelementen, Zahnmischelementen und Förderelementen besteht.

In Gehäuseteil 11 befindet sich die Entgasungsöffnung 13, deren Schneckenkonfiguration an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 30-33 als Stranggranulierung nach Wasserbadkühlung.

Die Formulierung, die in den Extruder zugeführt wird, besteht bei den Beispielen 30-33 aus einer Mischung aus:

- 63,7 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 7 Gew.-% eines Styrol-Acrylnitril-Copolymers (SAN) mit einem A:S-Gewichtsverhältnis von 24:76 und
- 11 Gew.-% eines Emulsions-ABS-Pfropfs in Pulverform mit einem A:B:S-Gewichtsverhältnis von 12:58:30 und
- 14 Gew.-% eines bei 23 °C fließfähigen Bisphenol-A basierenden Oligophosphats, insbesondere BDP, und
- 4,3 Gew.-% einer Pulvermischung enthaltend 3 Gew.-% eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) sowie 0,1 Gew.% Stabilisatoren, 0,8 Gew.-% Flammschutzmittel und 0,4 Gew.-% Entformungsmittel.

In den Beispielen 30-33 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Der Vergleich der Beispiele 30-33 mit den Beispielen 15-19 zeigt, dass die Verwendung von lediglich einem Polycarbonat in der Formulierung (Beispiele 30-33) im Vergleich zur Verwendung von zwei Polycarbonat-Komponenten mit unterschiedlicher Viskosität aber in Summe exakt gleicher Mischungsviskosität (Beispiele 15-19) bei gleichen Prozessparametern Massenstrom und Schneckenwellendrehzahl zu einer deutlich besseren Plastifiziergüte führt (siehe Tabelle 1, Spalten o, p und w).

Wie der Vergleich der Beispiele 15-19 und 30-33 weiterhin zeigt, wird unabhängig von der gewählten Zusammensetzung der Formulierung hinsichtlich der Polycarbonat-Komponente bzw. - komponenten sowie der gewählten Drehzahl oder dem gewählten Massenstrom immer eine erfindungsgemäße plastische Masse erhalten, wenn die Aufschmelzzahl (Tabelle 1, Spalte x) mindestens 1,18 beträgt, insbesondere mindestens 1,19 beträgt, während bei einer Aufschmelzzahl kleiner als 1,18, insbesondere bei einer Aufschmelzzahl von 1,14 oder kleiner, die Anzahl der Granulate mit unaufgeschmolzenen Partikeln unakzeptabel ist.

**Beispiele 34-35: Variation Extruder Durchmesser D**

Für die Herstellung der plastischen Masse in den Beispielen 34 und 35 wurde ein Doppelschneckenextruder ZSK92 Mc der Firma Coperion GmbH verwendet. Die baulichen Merkmale des Extruders finden sich in Tabelle 1 in den Spalten k bis n. Den prinzipiellen Aufbau des verwendeten Extruders für die Beispiele 34 und 35 zeigt Figur 5.

In den Beispielen 34 und 35 erfolgte die Dosierung aller Komponenten der Formulierung mittels handelsüblicher gravimetrischer Differentialdosierwaagen über den abgebildeten Einzugstrichter 15 in den Haupteinzug der Schneckenmaschine in Gehäuse 16.

Im Bereich der Gehäuse 17 bis 18 befindet sich eine Förderzone für alle Komponenten der Formulierung.

Im Bereich der Gehäuse 19 bis 20 befindet sich eine Plastifizierzone, deren Schneckenkonfiguration aus verschiedenen zwei- und dreigängigen Knetblöcken verschiedener Breite sowie Zahnmischelementen besteht.

Im Bereich des Gehäuses 21 befindet sich eine Mischzone, deren Schneckenkonfiguration aus Zahnmischelementen und Förderelementen besteht.

In Gehäuseteil 22 befindet sich die Entgasungsöffnung 24, welche an eine Absaugvorrichtung (nicht gezeigt) angeschlossen ist.

In Gehäuse 23 befindet sich die Druckaufbauzone und im Anschluss daran eine Düsenplatte mit 100 Löchern.

Die Granulierung erfolgte in den Beispielen 34 und 35 als Unterwassergranulierung.

Die Formulierung, die in den Extruder zugeführt wird, besteht bei den Beispielen 34 und 35 aus einer Mischung aus:

- 60,3 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und

- 17,2 Gew.-% eines Emulsions-ABS-Granulats mit einem A:B:S-Gewichtsverhältnis von 20:24:56 und

- 8,9 Gew.-% eines Masse-ABS-Granulats mit einem A:B:S-Gewichtsverhältnis von 25:10:65 und

- 9,5 Gew.-% eines Styrol-Acrylnitril-Copolymers (SAN) mit einem A:S-Gewichtsverhältnis von 24:76 und

- 4,1 Gew.-% einer Pulvermischung enthaltend 3 Gew.-% eines Emulsions-ABS-Pfropfs in Pulverform mit einem A:B:S-Gewichtsverhältnis von 12:58:30 sowie 0,35 Gew.% Stabilisatoren und 0,75 Gew.-% Entformungsmittel.

Im Vergleichsbeispiel 34 sowie dem erfindungsgemäßen Beispiel 35 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Wie die Beispiele 34 und 35 im Vergleich zu den Beispielen 1-6 zeigen, wird unabhängig vom Durchmesser des Extruders sowie der gewählten Drehzahl oder dem gewählten Massenstrom für die Formulierung immer eine erfindungsgemäße plastische Masse erhalten, wenn die Aufschmelzzahl (Tabelle 1, Spalte x) mindestens 1,18 beträgt, insbesondere mindestens 1,53 beträgt, während bei einer Aufschmelzzahl kleiner als 1,18, insbesondere bei einer Aufschmelzzahl von 0,77 oder kleiner, die Anzahl der Granulate mit unaufgeschmolzenen Partikeln unakzeptabel ist.

**Beispiele 36-40: Variation der Dosierstelle eines bei 23 °C fließfähigen Additivs**

Für die Herstellung der plastischen Masse in den Beispielen 36-40 wurde ein Doppelschneckenextruder ZE60B UTXi der Firma KraussMaffei Extrusion GmbH verwendet. Die baulichen Merkmale des Extruders finden sich in Tabelle 1 in den Spalten k bis n. Den prinzipiellen Aufbau des verwendeten Extruders für die Beispiele 36-40 zeigt Figur 4.

In den Beispielen 36-40 erfolgte die Dosierung aller Komponenten der Formulierung, ausgenommen das bei 23 °C fließfähige Additiv, mittels handelsüblicher gravimetrischer Differentialdosierwaagen über den abgebildeten Einzugstrichter 1 in den Haupteinzug der Schneckenmaschine in Gehäuse 2.

Im Bereich der Gehäuse 2 bis 7 befindet sich eine Förderzone für alle Komponenten der Formulierung.

Im Bereich des Gehäuses 8 befindet sich eine Plastifizierzone, welche aus verschiedenen zwei- und dreigängigen Knetblöcken verschiedener Breite sowie Zahnmischelementen besteht.

Im Gehäuse 9 wurde das bei 23 °C fließfähige Additiv mittels einer handelsüblichen Membran-Kolbenpumpe (nicht gezeigt) über ein Ventil (nicht gezeigt), welches in eine Bohrung 14 in Gehäuse 9 eingeschraubt war, in die plastische Masse eingespritzt.

Im Bereich der Gehäuse 9 bis 10 befindet sich eine Mischzone, welche aus Knetelementen, Zahnmischelementen und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

Die Granulierung erfolgte in den Beispielen 36-40 als Stranggranulierung nach Wasserbadkühlung.

Die Formulierung, die in den Extruder zugeführt wird, besteht bei den Beispielen 36-40 aus einer Mischung aus:

- 58,7 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 9,3 Gew.-% eines Styrol-Acrylnitril-Copolymers (SAN) mit einem A:S-Gewichtsverhältnis von 24:76 und
- 8,7 Gew.-% eines Emulsions-ABS-Pfropfs in Pulverform mit einem A:B:S-Gewichtsverhältnis von 12:58:30 und
- 20 Gew.-% eines bei 23 °C fließfähigen Bisphenol-A basierenden Oligophosphats, insbesondere BDP, und
- 4,3 Gew.-% einer Pulvermischung enthaltend 3 Gew.-% eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) sowie 0,1 Gew.% Stabilisatoren, 0,8 Gew.-% Flammschutzmittel und 0,4 Gew.-% Entformungsmittel.

In den Beispielen 36-40 wird die Formulierung mit den in Tabelle 1 angegebenen Schneckenwellendrehzahlen (Tabelle 1, Spalte p), Massenströmen (Tabelle 1, Spalte o) und den resultierenden spezifischen mechanischen Energieeinträgen (Tabelle 1, Spalte q) und Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Der Vergleich der Beispiele 36-40 zeigt, dass die Plastifiziergüte bei gleichen Prozessparametern Massenstrom und Schneckenwellendrehzahl steigt, je später das bei 23 °C fließfähige Additiv zugegeben wird (siehe Tabelle 1, Spalten o, p und w).

Wie der Vergleich der Beispiele 36-40 weiterhin zeigt, wird unabhängig von der Zugabestelle des bei 23 °C fließfähigen Additivs sowie der gewählten Drehzahl oder dem gewählten Massenstrom immer eine erfindungsgemäße plastische Masse erhalten, wenn die Aufschmelzzahl (Tabelle 1, Spalte x) mindestens 1,18 beträgt, insbesondere mindestens 1,35 beträgt, während bei einer Aufschmelzzahl kleiner als 1,18, insbesondere bei einer Aufschmelzzahl von 1,11 oder kleiner, die Anzahl der Granulate mit unaufgeschmolzenen Partikeln unakzeptabel ist.

## Beispiele 41-44: Variation Anzahl Extruderwellen

Für die Herstellung der plastischen Masse in den Beispielen 41-44 wurde ein Extruder mit zwölf gleichsinnig drehenden Wellen vom Typ Ringextruder RE1 der Firma CPM Extricom Extrusion GmbH verwendet. Die baulichen Merkmale des Extruders finden sich in Tabelle 1 in den Spalten k bis n. Den prinzipiellen Aufbau des verwendeten Extruders für die Beispiele 41-44 zeigt Figur 6.

In den Beispielen 41-44 erfolgte die Dosierung aller Komponenten der Formulierung mittels handelsüblicher gravimetrischer Differentialdosierwaagen über den abgebildeten Einzugstrichter 25 in den Haupteinzug der Schneckenmaschine in Gehäuse 26.

Im Bereich der Gehäuse 27 bis 29 befindet sich eine Förderzone für alle Komponenten der Formulierung.

Im Bereich des Gehäuses 30 befindet sich eine Plastifizierzone, deren Schneckenkonfiguration aus verschiedenen zweigängigen Knetblöcken verschiedener Breite besteht.

In Gehäuseteil 31 befindet sich die Entgasungsöffnung 33, welche an eine Absaugvorrichtung (nicht gezeigt) angeschlossen ist.

In Gehäuse 32 befindet sich die Druckaufbauzone und im Anschluss daran eine Düsenplatte mit 6 Löchern.

Die Granulierung erfolgte in den Beispielen 41-44 als Stranggranulierung nach Wasserbadkühlung.

Die Formulierung, die in den Extruder zugeführt wird, besteht bei den Beispielen 41-44 aus einer Mischung aus:

- 28 Gew.-% eines Granulats eines linearen Polycarbonats auf Basis von Bisphenol A mit einer relativen Viskosität $\eta_{rel}$ = 1,28 (gemessen in $CH_2Cl_2$ als Lösungsmittel bei 25°C und bei einer Konzentration von 0,5 g/100 ml) und
- 15 Gew.-% eines Granulats eines linearen Polycarbonats auf Basis von Bisphenol A mit einer relativen Viskosität $\eta_{rel}$ = 1.20 (gemessen in $CH_2Cl_2$ als Lösungsmittel bei 25°C und bei einer Konzentration von 0,5 g/100 ml) und

- 31 Gew.-% eines Styrol-Acrylnitril-Copolymers (SAN) mit einem A:S-Gewichtsverhältnis von 24:76 und
- 22 Gew.-% eines Emulsions-ABS-Pfropfs in Pulverform mit einem A:B:S-Gewichtsverhältnis von 12:58:30 und
- 4 Gew.-% einer Pulvermischung enthaltend 3,1 Gew.-% eines Emulsions-ABS-Pfropfs in Pulverform mit einem A:B:S-Gewichtsverhältnis von 12:58:30 sowie 0,16 Gew.% Stabilisatoren und 0,74 Gew.-% Entformungsmittel.

In den Vergleichsbeispielen 41 und 42 sowie den erfindungsgemäßen Beispielen 43 und 44 wird die Formulierung mit den in Tabelle 1 angegebenen Schneckenwellendrehzahlen (Tabelle 1, Spalte p), Massenströmen (Tabelle 1, Spalte o) und den resultierenden Temperaturen der aus der Düsenplatte austretenden Schmelze (Tabelle 1, Spalte r) compoundiert. Es resultieren die ebenfalls in Tabelle 1 angegebenen Anzahlen an Granulaten mit unaufgeschmolzenen Partikeln (Tabelle 1, Spalte w).

Wie die Beispiele 41-44 zeigen, wird auch bei einem Extruder mit zwölf Wellen unabhängig von der gewählten Drehzahl oder dem gewählten Massenstrom für die Formulierung immer eine erfindungsgemäße plastische Masse erhalten, wenn die Aufschmelzzahl (Tabelle 1, Spalte x) mindestens 1,18 beträgt, insbesondere mindestens 1,53 beträgt, während bei einer Aufschmelzzahl kleiner als 1,18, insbesondere bei einer Aufschmelzzahl von 1,03 oder kleiner, die Anzahl der Granulate mit unaufgeschmolzenen Partikeln unakzeptabel ist.

Um die Aufschmelzzahl zwischen der zwölfwelligen und der zweiwelligen Schneckenmaschine vergleichbar zu machen, ist bei der Berechnung der Aufschmelzzahl der zwölfwelligen Schneckenmaschine der Massenstrom $\dot{m}$ durch 6 zu dividieren, wobei vernachlässigt wird, dass es sich bei der zwölfwelligen Schneckenmaschine nicht um sechs zweiwellige Schneckenmaschinen handelt, sondern durchsatzsteigernde Effekte auftreten, weil bei jeder Schnecke zwei benachbarte Schnecken gleichzeitig im Eingriff sind statt nur einer Schnecke wie bei der zweiwelligen Schneckenmaschine. Durch die Division des Massenstroms durch 6 ergibt sich ein gleicher dimensionsloser Durchsatz und damit eine Vergleichbarkeit beider Schneckenmaschinen. Der dimensionslose Durchsatz ist z.B. in Kohlgrüber, Bierdel, Rust "Polymer-Aufbereitung und Kunststoff-Compoundierung", Hanser-Verlag, 2019, S. 36, Kapitel 2.3.7 als Durchsatzkennzahl $\dot{V}^*$ definiert, wobei als Bezugsdurchmesser D für die zwölfwellige sowie die zweiwellige Schneckenmaschine jeweils der Gehäuseinnendurchmesser verwendet wird.

**Fazit aller Beispiele:**

Die Beispiele 1 bis 44 zeigen, dass eine gute Plastifizierung einer plastischen Masse hergestellt aus einer Formulierung enthaltend mindestens zwei thermoplastische Komponenten, von denen mindestens eine ein Polycarbonat ist, erhalten wird, unabhängig von der Wärmekapazität der plastischen Masse, dem Granulatdurchmesser der höchstviskosen Polycarbonatkomponente der Formulierung, dem Gehäuseinnendurchmesser des Extruders, dem Aufbau des Extruders, der Dosierposition eines bei 23 °C fließfähigen Additivs, der Zusammensetzung der Formulierung, der Anzahl Wellen des Extruders sowie den Prozessparametern Massenstrom und Schneckenwellendrehzahl, wenn die Aufschmelzzahl mindestens 1,18 beträgt.

## Tabelle 1 (Beispiele 1-44)

| a | b | c.1 | c.2 | c.3 | d | e | f | g | h | i | j | k |
|---|---|---|---|---|---|---|---|---|---|---|---|---|
| Beispiel Nr. | | Granulatdurchmesser höchstviskosestes Polycarbonat d | Granulatdurchmesser niederviskoses Polycarbonat | Granulatdurchmesser SAN | Viskositätsverhältnis $\delta\eta_1$ | Viskositätsverhältnis $\delta\eta_2$ | Viskosität plastische Masse bei Schmelzetemperatur (Fall i) | Viskosität plastische Masse bei Schmelzetemperatur (Fall ii und iii) | mittlere spezifische Wärmekapazität plastische Masse $c_p$ | Feststoffdichte $\rho_{Feststoff}$ | Wärmeleitfähigkeit plastische Masse λ | Gehäuseinnendurchmesser Schneckenmaschine D |
| | | m | m | m | | | Pa s | Pa s | J/kg*K | kg/m^3 | W/mK | mm |
| 1 | Vergleich | 0.003271 | - | - | 1.33803 | 0.79898 | 433 | 4309 | 2443 | 1200 | 0.23 | 66.7 |
| 2 | Vergleich | 0.003215 | - | - | 1.22225 | 0.79465 | 256 | 3936 | 2443 | 1200 | 0.23 | 66.7 |
| 3 | erfindungsgemäß | 0.003271 | - | - | 1.33803 | 0.79720 | 342 | 4309 | 2443 | 1200 | 0.23 | 66.7 |
| 4 | erfindungsgemäß | 0.003271 | - | - | 1.33803 | 0.79757 | 384 | 4309 | 2443 | 1200 | 0.23 | 66.7 |
| 5 | erfindungsgemäß | 0.003215 | - | - | 1.22225 | 0.79498 | 253 | 3936 | 2443 | 1200 | 0.23 | 66.7 |
| 6 | erfindungsgemäß | 0.003182 | - | - | 1.22225 | 0.79561 | 246 | 3936 | 2443 | 1200 | 0.23 | 66.7 |
| 7 | Vergleich | 0.003185 | - | - | 1.50284 | 1.05079 | 328 | 4839 | 2424 | 1200 | 0.23 | 66.7 |
| 8 | Vergleich | 0.003188 | - | - | 1.50289 | 1.04654 | 354 | 4839 | 2424 | 1200 | 0.23 | 66.7 |
| 9 | erfindungsgemäß | 0.003188 | - | - | 1.58173 | 1.04519 | 407 | 5093 | 2424 | 1200 | 0.23 | 66.7 |
| 10 | erfindungsgemäß | 0.003188 | - | - | 1.43323 | 1.06395 | 252 | 4615 | 2424 | 1200 | 0.23 | 66.7 |
| 11 | Vergleich | 0.003132 | - | - | 2.75071 | 0.51053 | 224 | 21610 | 2203 | 1200 | 0.23 | 66.7 |
| 12 | erfindungsgemäß | 0.003132 | - | - | 2.75086 | 0.51962 | 200 | 21612 | 2203 | 1200 | 0.23 | 66.7 |
| 13 | erfindungsgemäß | 0.003132 | - | - | 2.75077 | 0.51751 | 205 | 21611 | 2203 | 1200 | 0.23 | 66.7 |
| 14 | erfindungsgemäß | 0.003132 | - | - | 2.51880 | 0.53635 | 165 | 19788 | 2203 | 1200 | 0.23 | 66.7 |
| 15 | Vergleich | 0.003143 | 0.003264 | 0.003488 | 1.61481 | 0.47843 | 364 | 19113 | 2217 | 1200 | 0.23 | 66.7 |
| 16 | Vergleich | 0.003143 | 0.003264 | 0.003488 | 1.32560 | 0.52629 | 270 | 15690 | 2217 | 1200 | 0.23 | 66.7 |
| 17 | Vergleich | 0.003143 | 0.003264 | 0.003488 | 1.32558 | 0.52140 | 276 | 15690 | 2217 | 1200 | 0.23 | 66.7 |
| 18 | erfindungsgemäß | 0.003143 | 0.003264 | 0.003488 | 1.61480 | 0.48364 | 352 | 19113 | 2217 | 1200 | 0.23 | 66.7 |
| 19 | erfindungsgemäß | 0.003122 | 0.003195 | 0.003488 | 1.32560 | 0.54916 | 241 | 15690 | 2217 | 1200 | 0.23 | 66.7 |
| 20 | Vergleich | 0.003122 | 0.003603 | 0.003408 | 1.61487 | 0.48016 | 360 | 19114 | 2217 | 1200 | 0.23 | 66.7 |
| 21 | Vergleich | 0.003122 | 0.003603 | 0.003408 | 1.32562 | 0.52186 | 276 | 15690 | 2217 | 1200 | 0.23 | 66.7 |

# Tabelle 1 (Beispiele 1-44) Fortsetzung

| a | b | c.1 | c.2 | c.3 | d | e | f | g | h | i | j | k |
|---|---|---|---|---|---|---|---|---|---|---|---|---|
| Beispiel Nr. | | Granulatdurchmesser höchstviskosestes Polycarbonat d | Granulatdurchmesser niederviskoses Polycarbonat | Granulatdurchmesser SAN | Viskositätsverhältnis $\delta\eta_1$ | Viskositätsverhältnis $\delta\eta_2$ | Viskosität plastische Masse bei Schmelzetemperatur (Fall i) | Viskosität plastische Masse bei Schmelzetemperatur (Fall ii und iii) | mittlere spezifische Wärmekapazität plastische Masse $c_p$ | Feststoffdichte $\rho_{Feststoff}$ | Wärmeleitfähigkeit plastische Masse $\lambda$ | Gehäuseinnendurchmesser Schneckenmaschine D |
| | | m | m | m | | | Pa s | Pa s | J/kg*K | kg/m^3 | W/mK | mm |
| 22 | erfindungsgemäß | 0.003122 | 0.003603 | 0.003408 | 1.32561 | 0.55736 | 233 | 15690 | 2217 | 1200 | 0.23 | 66.7 |
| 23 | erfindungsgemäß | 0.003122 | 0.003603 | 0.003408 | 1.61480 | 0.48791 | 343 | 19113 | 2217 | 1200 | 0.23 | 66.7 |
| 24 | Vergleich | 0.003547 | 0.003195 | 0.003408 | 1.61477 | 0.47509 | 372 | 19113 | 2217 | 1200 | 0.23 | 66.7 |
| 25 | Vergleich | 0.003547 | 0.003195 | 0.003408 | 1.61481 | 0.48225 | 355 | 19113 | 2217 | 1200 | 0.23 | 66.7 |
| 26 | Vergleich | 0.003547 | 0.003195 | 0.003408 | 1.32561 | 0.54831 | 242 | 15690 | 2217 | 1200 | 0.23 | 66.7 |
| 27 | Vergleich | 0.003547 | 0.003195 | 0.003408 | 1.32563 | 0.52058 | 278 | 15691 | 2217 | 1200 | 0.23 | 66.7 |
| 28 | Vergleich | 0.003239 | 0.003240 | 0.004002 | 1.61471 | 0.46119 | 412 | 19112 | 2217 | 1200 | 0.23 | 66.7 |
| 29 | Vergleich | 0.003239 | 0.003240 | 0.004002 | 1.61471 | 0.45333 | 439 | 19112 | 2217 | 1200 | 0.23 | 66.7 |
| 30 | erfindungsgemäß | 0.003153 | - | - | 1.32562 | 0.74340 | 255 | 15690 | 2217 | 1200 | 0.23 | 66.7 |
| 31 | Vergleich | 0.003153 | - | - | 1.32557 | 0.74376 | 254 | 15690 | 2217 | 1200 | 0.23 | 66.7 |
| 32 | erfindungsgemäß | 0.003153 | - | - | 1.61486 | 0.68606 | 336 | 19114 | 2217 | 1200 | 0.23 | 66.7 |
| 33 | erfindungsgemäß | 0.003153 | - | - | 1.32563 | 0.77535 | 225 | 15690 | 2217 | 1200 | 0.23 | 66.7 |
| 34 | Vergleich | 0.003391 | - | - | 1.30353 | 0.79717 | 447 | 4198 | 2443 | 1200 | 0.23 | 92.8 |
| 35 | erfindungsgemäß | 0.003391 | - | - | 1.36460 | 0.79880 | 311 | 4394 | 2443 | 1200 | 0.23 | 92.8 |
| 36 | Vergleich | 0.003236 | - | - | 1.36871 | 0.28901 | 521 | 32804 | 2217 | 1200 | 0.23 | 66.7 |
| 37 | erfindungsgemäß | 0.003236 | - | - | 1.28944 | 0.31718 | 320 | 30904 | 2217 | 1200 | 0.23 | 66.7 |
| 38 | Vergleich | 0.003236 | - | - | 1.28944 | 0.29789 | 411 | 30904 | 2217 | 1200 | 0.23 | 66.7 |
| 39 | Vergleich | 0.003236 | - | - | 1.28944 | 0.30988 | 347 | 30904 | 2217 | 1200 | 0.23 | 66.7 |
| 40 | erfindungsgemäß | 0.003236 | - | - | 1.02039 | 0.35487 | 228 | 24456 | 2217 | 1200 | 0.23 | 66.7 |
| 41 | Vergleich | 0.003236 | - | - | 1.17229 | 0.91894 | 450 | 3775 | 2868 | 1200 | 0.20 | 19 |
| 42 | Vergleich | 0.003236 | - | - | 1.28608 | 0.93006 | 761 | 4141 | 2868 | 1200 | 0.20 | 19 |
| 43 | erfindungsgemäß | 0.003236 | - | - | 1.43215 | 0.98359 | 1182 | 4612 | 2868 | 1200 | 0.20 | 19 |
| 44 | erfindungsgemäß | 0.003236 | - | - | 1.28608 | 0.92729 | 595 | 4141 | 2868 | 1200 | 0.20 | 19 |

## Tabelle 1 (Beispiele 1-44) Fortsetzung

| a | b | l | m | n | o | p | q | r | s | t | u | v | w | x |
|---|---|---|---|---|---|---|---|---|---|---|---|---|---|---|
| Beispiel Nr. | | Verhältnis Länge zu Gehäuse-innendurchmesser Schneckenmaschine | Längenabschnitt der Schneckenmaschine für $\tau_1$ | Längenabschnitt der Schneckenmaschine für $\tau_2$ | Massenstrom $\dot{m}$ | Drehzahl Schneckenwellen n | spezifischer mechanischer Energieeintrag | Schmelzetemperatur Fall i | Schmelzetemperatur Fall ii und iii | $\tau_1$ | $\tau_2$ | Druck vor Düsenplatte | Anzahl Granulate mit unaufgeschmolzenen Partikeln in 330 Granulaten | Aufschmelzzahl |
| | | | mm | mm | kg/h | $min^{-1}$ | kWh/kg | °C | °C | s | s | bar | % | |
| 1 | Vergleich | 41.4 | 1463 | - | 1050 | 400 | 0.139 | 285 | 230 | 13.5610 | 0.0000 | 42 | 6.82 | 1.08 |
| 2 | Vergleich | 41.4 | 1463 | - | 1150 | 600 | 0.150 | 301 | 230 | 10.3660 | 0.0000 | 35 | 5.4 | 1.07 |
| 3 | erfindungsgemäß | 41.4 | 1463 | - | 700 | 400 | 0.145 | 292 | 230 | 16.1170 | 0.0000 | 30 | 0 | 1.93 |
| 4 | erfindungsgemäß | 41.4 | 1463 | - | 950 | 400 | 0.139 | 289 | 230 | 13.9870 | 0.0000 | 36 | 0.57 | 1.23 |
| 5 | erfindungsgemäß | 41.4 | 1463 | - | 1050 | 600 | 0.157 | 301 | 230 | 10.9340 | 0.0000 | 35 | 0.9 | 1.24 |
| 6 | erfindungsgemäß | 41.4 | 1463 | - | 1000 | 600 | 0.159 | 302 | 230 | 11.2180 | 0.0000 | 34 | 0.0 | 1.36 |
| 7 | Vergleich | 41.4 | 1463 | - | 1350 | 500 | 0.144 | 300 | 230 | 10.5790 | 0.0000 | 41 | 2.65 | 0.98 |
| 8 | Vergleich | 41.4 | 1463 | - | 1400 | 500 | 0.142 | 299 | 230 | 10.4370 | 0.0000 | 42 | 6.32 | 0.93 |
| 9 | erfindungsgemäß | 41.4 | 1463 | - | 1030 | 400 | 0.140 | 295 | 230 | 13.2060 | 0.0000 | 40 | 0 | 1.35 |
| 10 | erfindungsgemäß | 41.4 | 1463 | - | 1200 | 600 | 0.156 | 311 | 230 | 10.0820 | 0.0000 | 34 | 0.25 | 1.20 |
| 11 | Vergleich | 41.4 | 514 | 949 | 1100 | 400 | 0.127 | 291 | 184 | 4.1180 | 9.5140 | 65 | 6.84 | 1.12 |
| 12 | erfindungsgemäß | 41.4 | 514 | 949 | 900 | 400 | 0.134 | 295 | 184 | 4.8280 | 10.0820 | 54 | 0 | 1.56 |
| 13 | erfindungsgemäß | 41.4 | 514 | 949 | 1000 | 400 | 0.131 | 294 | 184 | 4.5440 | 9.6560 | 59 | 0.7 | 1.33 |
| 14 | erfindungsgemäß | 41.4 | 514 | 949 | 1100 | 500 | 0.136 | 302 | 184 | 4.1180 | 7.9520 | 53 | 1.07 | 1.26 |
| 15 | Vergleich | 41.4 | 514 | 949 | 850 | 400 | 0.118 | 275 | 166 | 5.1120 | 9.7980 | 46 | 10.54 | 1.14 |
| 16 | Vergleich | 41.4 | 514 | 949 | 1000 | 600 | 0.129 | 287 | 166 | 4.1180 | 6.9580 | 39 | 5.56 | 1.02 |
| 17 | Vergleich | 41.4 | 514 | 949 | 1100 | 600 | 0.128 | 286 | 166 | 3.8340 | 6.8160 | 42 | 17 | 0.88 |
| 18 | erfindungsgemäß | 41.4 | 514 | 949 | 750 | 400 | 0.121 | 276 | 166 | 5.6800 | 10.0820 | 41 | 0.91 | 1.40 |
| 19 | erfindungsgemäß | 41.4 | 514 | 949 | 850 | 600 | 0.134 | 291 | 166 | 4.6860 | 7.2420 | 31 | 0 | 1.36 |
| 20 | Vergleich | 41.4 | 514 | 949 | 850 | 400 | 0.117 | 276 | 166 | 5.1120 | 9.7980 | 45 | 8.45 | 1.16 |
| 21 | Vergleich | 41.4 | 514 | 949 | 1100 | 600 | 0.127 | 286 | 166 | 3.8340 | 6.8160 | 42 | 15.48 | 0.89 |

## Tabelle 1 (Beispiele 1-44) Fortsetzung

| a | b | l | m | n | o | p | q | r | s | t | u | v | w | x |
|---|---|---|---|---|---|---|---|---|---|---|---|---|---|---|
| Beispiel Nr. | | Verhältnis Länge zu Gehäuse-innendurchmesser Schneckenmaschine | Längenabschnitt der Schneckenmaschine für $\tau_1$ | Längenabschnitt der Schneckenmaschine für $\tau_2$ | Massenstrom $\dot{m}$ | Drehzahl Schneckenwellen n | spezifischer mechanischer Energieeintrag | Schmelzetemperatur Fall i | Schmelzetemperatur Fall ii und iii | $\tau_1$ | $\tau_2$ | Druck vor Düsenplatte | Anzahl Granulate mit unaufgeschmolzenen Partikeln in 330 Granulaten | Aufschmelzzahl |
| | | | mm | mm | kg/h | $min^{-1}$ | kWh/kg | °C | °C | s | s | bar | % | |
| 22 | erfindungsgemäß | 41.4 | 514 | 949 | 850 | 600 | 0.134 | 293 | 166 | 4.6860 | 7.2420 | 31 | 0.39 | 1.37 |
| 23 | erfindungsgemäß | 41.4 | 514 | 949 | 750 | 400 | 0.122 | 277 | 166 | 5.6800 | 10.0820 | 39 | 1.29 | 1.42 |
| 24 | Vergleich | 41.4 | 514 | 949 | 850 | 400 | 0.117 | 274 | 166 | 5.1120 | 9.7980 | 45 | 31.22 | 0.89 |
| 25 | Vergleich | 41.4 | 514 | 949 | 750 | 400 | 0.122 | 276 | 166 | 5.6800 | 10.0820 | 39 | 7.78 | 1.10 |
| 26 | Vergleich | 41.4 | 514 | 949 | 850 | 600 | 0.135 | 291 | 166 | 4.6860 | 7.2420 | 31 | 6.47 | 1.06 |
| 27 | Vergleich | 41.4 | 514 | 949 | 1100 | 600 | 0.126 | 285 | 166 | 3.8340 | 6.8160 | 41 | 70.96 | 0.69 |
| 28 | Vergleich | 41.4 | 514 | 949 | 850 | 400 | 0.119 | 271 | 166 | 5.1120 | 9.3720 | 38.2 | 8.79 | 1.04 |
| 29 | Vergleich | 41.4 | 514 | 949 | 950 | 400 | 0.115 | 268 | 166 | 4.6860 | 9.2300 | 44.5 | 23.95 | 0.87 |
| 30 | erfindungsgemäß | 41.4 | 514 | 949 | 1000 | 600 | 0.130 | 289 | 166 | 4.1180 | 6.9580 | 38 | 1.5 | 1.19 |
| 31 | Vergleich | 41.4 | 514 | 949 | 1100 | 600 | 0.133 | 289 | 166 | 3.8340 | 6.8160 | 42 | 3.95 | 1.03 |
| 32 | erfindungsgemäß | 41.4 | 514 | 949 | 750 | 400 | 0.124 | 278 | 166 | 5.6800 | 10.0820 | 39 | 0.59 | 1.59 |
| 33 | erfindungsgemäß | 41.4 | 514 | 949 | 850 | 600 | 0.140 | 294 | 166 | 4.6860 | 7.2420 | 32 | 0 | 1.55 |
| 34 | Vergleich | 31 | 1790 | - | 3000 | 455 | 0.147 | 284 | 230 | 9.8690 | 0.0000 | | 39.50 | 0.77 |
| 35 | erfindungsgemäß | 31 | 1790 | - | 2200 | 360 | 0.156 | 295 | 230 | 17.4518 | 0.0000 | | 0 | 1.53 |
| 36 | Vergleich | 41.4 | 514 | 949 | 500 | 360 | 0.061 | 250 | 144 | 0.0000 | 22.4360 | 38 | 100 | 0.82 |
| 37 | erfindungsgemäß | 41.4 | 514 | 949 | 500 | 400 | 0.122 | 267 | 144 | 3.5500 | 17.6080 | 24 | 0 | 1.43 |
| 38 | Vergleich | 41.4 | 514 | 949 | 700 | 400 | 0.109 | 258 | 144 | 3.8340 | 12.9220 | 39 | 91 | 0.89 |
| 39 | Vergleich | 41.4 | 514 | 949 | 700 | 400 | 0.114 | 264 | 144 | 5.9640 | 10.7920 | 34 | 11.5 | 1.11 |
| 40 | erfindungsgemäß | 41.4 | 514 | 949 | 700 | 600 | 0.135 | 280 | 144 | 5.5380 | 9.2300 | 23 | 0.3 | 1.35 |
| 41 | Vergleich | 34 | 361 | - | 100 | 800 | 0.013 | 288 | 230 | 6.6740 | 0.0000 | 31 | 7.2 | 1.03 |
| 42 | Vergleich | 34 | 361 | - | 120 | 600 | 0.011 | 273 | 230 | 7.1000 | 0.0000 | 36 | 10 | 0.75 |
| 43 | erfindungsgemäß | 34 | 361 | - | 70 | 400 | 0.013 | 262 | 230 | 11.3600 | 0.0000 | 33 | 0 | 1.53 |
| 44 | erfindungsgemäß | 34 | 361 | - | 51 | 600 | 0.015 | 280 | 230 | 11.3600 | 0.0000 | 23 | 0 | 2.83 |

**Patentansprüche**

**1.** Verfahren zur Herstellung einer plastischen Masse

in einer mehrwelligen Schneckenmaschine mit gleichläufigen, parallelen, sich gleichschnell drehenden Schneckenwellen,
wobei sich die Schneckenwellen mit einer Drehzahl n drehen,
wobei die plastische Masse aus einer Formulierung enthaltend mindestens zwei thermoplastische Komponenten hergestellt wird,
wobei es sich bei mindestens einer der mindestens zwei thermoplastischen Komponenten um ein Polycarbonat handelt,
wobei die plastische Masse

(i) kein bei 23 °C fließfähiges Additiv aufweist,
oder
(ii) genau ein bei 23 °C fließfähiges Additiv aufweist,
oder
(iii) mindestens zwei bei 23 °C fließfähige Additive aufweist,

wobei die dynamische Viskosität gemessen nach ISO 11443:2014 Methode A2 der plastischen Masse bei einer Schergeschwindigkeit $\dot{\gamma}$ von 200 1/s
und
im Fall (i)
einer Temperatur von 230 °C
und
im Fall (ii)
einer Temperatur von 230 °C minus 230 °C multipliziert mit dem doppelten auf die Masse der plastischen Masse bezogenen Masse-Anteils des genau einen bei 23 °C fließfähigen Additivs,
und
im Fall (iii)
einer Temperatur von 230 °C minus 230 °C multipliziert mit dem doppelten auf die Masse der plastischen Masse bezogenen Summe der Masse-Anteile der mindestens zwei bei 23 °C fließfähigen Additive,
bezogen auf die Viskosität gemessen nach ISO 11443:2014 Methode A2 von mindestens einer dieser thermoplastischen Komponenten, gemessen bei einer Schergeschwindigkeit $\dot{\gamma}$ von 200 1/s und einer Temperatur von 230 °C, in einem Verhältnis von 0,3 bis 3 steht, und wobei die mindestens zwei thermoplastischen Komponenten sich in mindestens einem der folgenden Merkmale unterscheiden:

mindestens eine Struktureinheit ist unterschiedlich,
oder
der Unterschied in der relativen Lösungsviskosität, gemessen nach EN ISO 1628-1:2021, beträgt mindestens 5 %,
wobei das Verfahren durch eine Aufschmelzzahl gekennzeichnet ist,
wobei die Aufschmelzzahl in dem Längenabschnitt der Schneckenmaschine, der in einem Abstand von zweimal dem Gehäuseinnendurchmesser D vor dem ersten Schneckenelement beginnt, das kein Förderelement ist, und mit dem letzten Schneckenelement der Schneckenmaschine endet,
von 1,18 bis 8 beträgt, wobei für diese Aufschmelzzahl gilt:

$$\boldsymbol{Aufschmelzzahl = \frac{(\tau_1 \cdot \delta\eta_1 + \tau_2 \cdot \delta\eta_2) \cdot \lambda \cdot n \cdot D^3}{d^2 \cdot c_p \cdot \dot{m}}}$$

und wobei:

$\tau_1$ die mittlere Verweilzeit der plastischen Masse in dem Längenabschnitt der Schneckenmaschine ist, der in einem Abstand von zweimal dem Gehäuseinnendurchmesser D vor dem ersten Schneckenelement beginnt, das kein Förderelement ist,
und
im Fall (i)

mit dem letzten Schneckenelement der Schneckenmaschine endet,
und in den Fällen (ii) oder (iii)
mit der ersten Zugabestelle eines bei 23 °C fließfähigen Additivs stromabwärts vom ersten Schneckenelement, das kein Förderelement ist, endet,
und wobei gilt, dass
$\delta\eta_1$ ist das Verhältnis der dynamischen Viskosität der plastischen Masse bei einer Schergeschwindigkeit $\dot{\Upsilon}$ entsprechend der Drehzahl n der Schneckenwellen und
im Fall (i)
einer Temperatur von 230 °C
und
im Fall (ii)
einer Temperatur von 230 °C minus 230 °C multipliziert mit dem doppelten auf die Masse der plastischen Masse bezogenen Masse-Anteils des genau einen bei 23 °C fließfähigen Additivs,
und
im Fall (iii)
einer Temperatur von 230 °C minus (230 °C multipliziert mit dem doppelten auf die gesamte Masse der plastischen Masse bezogenen Summe der Masse-Anteile der mindestens zwei bei 23 °C fließfähigen Additive)
bezogen auf die dynamische Viskosität der thermoplastischen Komponente mit der höchsten dynamischen Viskosität gemessen bei einer Schergeschwindigkeit $\dot{\Upsilon}$ von 200 1/s und
im Fall (i)
einer Temperatur von 230 °C
und
im Fall (ii)
einer Temperatur von 230 °C minus 230 °C multipliziert mit dem doppelten auf die Masse der plastischen Masse bezogenen Masse-Anteils des genau einen bei 23 °C fließfähigen Additivs,
und
im Fall (iii)
einer Temperatur von 230 °C minus (230 °C multipliziert mit dem doppelten auf die Masse der plastischen Masse bezogenen Summe der Masse-Anteile der mindestens zwei bei 23 °C fließfähigen Additive),
$\tau_2$ ist
im Fall (ii) und im Fall (iii)
die mittlere Verweilzeit der plastischen Masse in dem Längenabschnitt der Schneckenmaschine ist, der mit der ersten Zugabestelle eines bei 23 °C fließfähigen Additivs stromabwärts in einem Abstand von zweimal dem Gehäuseinnendurchmesser D vor dem ersten Schneckenelement beginnt, das kein Förderelement ist, und mit dem letzten Schneckenelement der Schneckenmaschine endet,
und
im Fall (i)
gleich Null,
$\delta\eta_2$ ist das Verhältnis der dynamischen Viskosität der plastischen Masse bei einer Schergeschwindigkeit $\dot{\Upsilon}$ entsprechend der Drehzahl n der Schneckenwellen und bei einer Temperatur entsprechend der Temperatur der plastischen Masse am Ende des letzten Schneckenelements bezogen auf die dynamische Viskosität der thermoplastischen Komponente mit der höchsten dynamischen Viskosität gemessen bei einer Schergeschwindigkeit von 200 1/s und einer Temperatur entsprechend der Temperatur der plastischen Masse am Ende des letzten Schneckenelements,
$\lambda$ ist die Wärmeleitfähigkeit gemessen nach EN ISO 11357-8:2021 bei 23 °C, die die plastische Masse unmittelbar nach dem Austritt aus der Schneckenmaschine aufweist,
**n** ist die Drehzahl der Schneckenwellen der Schneckenmaschine,
**d** ist der Durchmesser der Granulate des in der Formulierung zur Herstellung der plastischen Masse enthaltenen Polycarbonats mit der höchsten relativen Viskosität gemessen nach EN ISO 1628-1:2021 ist,
**D** ist der innere Durchmesser der Gehäuse der Schneckenmaschine, wobei der Gehäuseinnendurchmesser D dabei für alle Gehäuse der Schneckenmaschine gleich ist,
$\mathbf{c_p}$ ist die mittlere spezifische Wärmekapazität gemessen nach ISO 11357-4:2021 im Temperaturbereich zwischen 250 °C und 300 °C,
$\dot{\mathbf{m}}$ ist der Massenstrom [kg/s] der plastischen Masse in der Schneckenmaschine.

2. Verfahren nach Anspruch 1, wobei die Aufschmelzzahl von 1,18 bis 5 beträgt.

3. Verfahren nach Anspruch 1 oder 2, wobei die Aufschmelzzahl von 1,2 bis 3 beträgt.

4. Verfahren nach einem der Ansprüche 1 bis 3, wobei für den Fall, dass mindestens ein bei 23 °C fließfähiges Additiv eingesetzt zugegeben wird, eines dieser Additive Bisphenol-A-bis(diphenylphosphat) ist.

5. Verfahren nach einem der Ansprüche 1 bis 4, wobei alle thermoplastischen Komponenten der Formulierung Polycarbonate sind.

6. Verfahren nach einem der Ansprüche 1 bis 4, wobei für den Fall, dass eine thermoplastische Komponente der mindestens zwei thermoplastischen Komponenten kein Polycarbonat ist, diese thermoplastische Komponente, die kein Polycarbonat ist, ausgewählt ist aus der Gruppe umfassend die Mitglieder:
Polyestercarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinyliden-fluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrol-blockcopolymere und Polyvinylchlorid.

7. Verfahren nach einem der Ansprüche 1 bis 6, wobei der Anteil an Polycarbonat in der Formulierung zur Herstellung der plastischen Masse von 20 bis 98 Gew.-%, insbesondere 40 bis 80 Gew.-%, beträgt.

8. Verfahren nach einem der Ansprüche 1 bis 7, wobei es sich bei mindestens einer der thermoplastischen Komponenten, die ein Polycarbonat ist, um ein aromatisches Polycarbonat auf Basis von Bisphenol A handelt, insbesondere um ein lineares aromatisches Polycarbonat auf Basis von Bisphenol A handelt.

9. Verfahren nach Anspruch 6, wobei für den Fall, dass eine thermoplastische Komponente der mindestens zwei thermoplastischen Komponenten kein Polycarbonat ist, diese thermoplastische Komponente ein kautschukmodifiziertes Vinyl(co)polymerisat ist.

## Claims

1. Process for producing a plastic mass

in a multishaft screw machine with corotating parallel screw shafts that rotate at equal speed,
wherein the screw shafts rotate at a speed n,
wherein the plastic mass is produced from a formulation containing at least two thermoplastic components,
wherein at least one of the at least two thermoplastic components is a polycarbonate,
wherein the plastic mass

(i) does not include any additive that is free-flowing at 23°C,
or
(ii) includes exactly one additive that is free-flowing at 23°C,
or
(iii) includes at least two additives that are free-flowing at 23°C,

wherein dynamic viscosity measured to ISO 11443:2014 Method A2 of the plastic mass at a shear rate $\dot{\gamma}$ of 200 1/s
and
in case (i)
at a temperature of 230°C
and
in case (ii)
at a temperature of 230°C minus 230°C multiplied by twice the proportion by mass of the exactly one additive that is free-flowing at 23°C based on the mass of the plastic mass,
and
in case (iii)

at a temperature of 230°C minus 230°C multiplied by twice the sum total of the proportions by mass of the at least two additives that are free-flowing at 23°C based on the mass of the plastic mass,
based on the viscosity measured to ISO 11443:2014 Method A2 of at least one of these thermoplastic components, measured at a shear rate $\dot{\Upsilon}$ of 200 1/s and a temperature of 230°C, is in a ratio of 0.3 to 3, and wherein the at least two thermoplastic components differ in at least one of the following features:

at least one structural unit is different,
or
the difference in relative solution viscosity, measured to EN ISO 1628-1:2021, is at least 5%,
wherein the process is **characterized by** a melting rate, wherein the melting rate in the longitudinal section of the screw machine that begins at a distance of twice the internal housing diameter D upstream of the first screw element that is not a conveying element and ends with the last screw element of the screw machine is from 1.18 to 8, where this melting rate is as follows:

$$Melting\ rate = \frac{(\tau_1 \cdot \delta\eta_1 + \tau_2 \cdot \delta\eta_2) \cdot \lambda \cdot n \cdot D^3}{d^2 \cdot c_p \cdot \dot{m}}$$

and where:

$\tau_1$ is the average dwell time of the plastic mass in the longitudinal section of the screw machine that begins at a distance of twice the internal housing diameter D upstream of the first screw element that is not a conveying element,
and
in case (i)
ends with the last screw element of the screw machine,
and in cases (ii) or (iii)
ends with the first addition site for an additive that is free-flowing at 23°C downstream of the first screw element that is not a conveying element,
and where
$\delta\eta_1$ is the ratio of the dynamic viscosity of the plastic mass at a shear rate $\dot{\Upsilon}$ corresponding to the speed n of the screw shafts and
in case (i)
at a temperature of 230°C
and
in case (ii)
at a temperature of 230°C minus 230°C multiplied by twice the proportion by mass of the exactly one additive that is free-flowing at 23°C based on the mass of the plastic mass,
and
in case (iii)
at a temperature of 230°C minus (230°C multiplied by twice the sum total of the proportions by mass of the at least two additives that are free-flowing at 23°C based on the total mass of the plastic mass)
based on the dynamic viscosity of the thermoplastic component having the highest dynamic viscosity measured at a shear rate $\dot{\Upsilon}$ of 200 *1/s* and
in case (i)
at a temperature of 230°C
and
in case (ii)
at a temperature of 230°C minus 230°C multiplied by twice the proportion by mass of the exactly one additive that is free-flowing at 23°C based on the mass of the plastic mass,
and
in case (iii)
at a temperature of 230°C minus (230°C multiplied by twice the sum total of the proportions by mass of the at least two additives that are free-flowing at 23°C based on the mass of the plastic mass),
$\tau_2$ is
in case (ii) and in case (iii)
the average dwell time of the plastic mass in the longitudinal section of the screw machine that begins with the first addition site for an additive that is free-flowing at 23°C downstream at a distance of twice the

internal housing diameter D upstream of the first screw element that is not a conveying element and ends with the last screw element of the screw machine,
and
in case (i)
is zero,
$\delta\eta_2$ is the ratio of the dynamic viscosity of the plastic mass at a shear rate $\dot{\gamma}$ corresponding to the speed n of the screw shafts and at a temperature corresponding to the temperature of the plastic mass at the end of the last screw element, based on the dynamic viscosity of the thermoplastic component having the highest dynamic viscosity measured at a shear rate of 200 1/s and at a temperature corresponding to the temperature of the plastic mass at the end of the last screw element,
$\lambda$ is the thermal conductivity measured to EN ISO 11357-8:2021 at 23°C, exhibited by the plastic mass immediately after exiting from the screw machine,
n is the speed of the screw shafts of the screw machine,
d is the diameter of the pellets of the polycarbonate present in the formulation for production of the plastic mass that has the highest relative viscosity measured to EN ISO 1628-1:2021,
D is the internal diameter of the housings of the screw machine, where the internal housing diameter D is the same for all housings of the screw machine,
$c_p$ is the average specific heat capacity measured to ISO 11357-4:2021 in the temperature range between 250°C and 300°C,
m is the mass flow rate [kg/s] of the plastic mass in the screw machine.

**2.** Process according to Claim 1, wherein the melting rate is 1.18 to 5.

**3.** Process according to Claim 1 or 2, wherein the melting rate is 1.2 to 3.

**4.** Process according to any of Claims 1 to 3, wherein, if at least one additive that is free-flowing at 23°C is used added, one of these additives is bisphenol A bis(diphenylphosphate).

**5.** Process according to any of Claims 1 to 4, wherein all thermoplastic components in the formulation are polycarbonates.

**6.** Process according to any of Claims 1 to 4, wherein, if one thermoplastic component of the at least two thermoplastic components is not a polycarbonate, said thermoplastic component that is not a polycarbonate is selected from the group comprising the following members: polyester carbonate, polyamide, polyesters, in particular polybutylene terephthalate and polyethylene terephthalate, polylactides, polyethers, thermoplastic polyurethane, polyacetal, fluoropolymer, in particular polyvinylidene fluoride, polyether sulfones, polyolefin, in particular polyethylene and polypropylene, polyimide, polyacrylate, in particular poly(methyl)methacrylate, polyphenylene oxide, polyphenylene sulfide, polyether ketone, polyaryl ether ketone, styrene polymers, in particular polystyrene, styrene copolymers, in particular styrene-acrylonitrile copolymer, acrylonitrile-butadiene-styrene block copolymers and polyvinylchloride.

**7.** Process according to any of Claims 1 to 6, wherein the proportion of polycarbonate in the formulation for production of the plastic mass is from 20% to 98% by weight, especially 40% to 80% by weight.

**8.** Process according to any of Claims 1 to 7, wherein at least one of the thermoplastic components that is a polycarbonate is an aromatic polycarbonate based on bisphenol A, especially a linear aromatic polycarbonate based on bisphenol A.

**9.** Process according to Claim 6, wherein, if one thermoplastic component of the at least two thermoplastic components is not a polycarbonate, this thermoplastic component is a rubber-modified vinyl (co)polymer.

## Revendications

**1.** Procédé de fabrication d'une masse plastique

dans une machine à vis à arbres multiples comprenant des arbres à vis tournant dans la même direction, parallèles et de même vitesse,
les arbres à vis tournant à une vitesse de rotation n, la masse plastique étant fabriquée à partir d'une formulation

contenant au moins deux constituants thermoplastiques,
au moins l'un desdits au moins deux constituants thermoplastiques étant un polycarbonate,
la masse plastique

(i) ne comportant pas d'additif fluide à 23 °C,
ou
(ii) comportant précisément un additif fluide à 23 °C,
ou
(iii) comportant au moins deux additifs fluides à 23 °C,

la viscosité dynamique de la masse plastique, mesurée selon la méthode A2 de la norme ISO 11443:2014 à une vitesse de cisaillement $\dot{\gamma}$ de 200 *1/s*
et
dans le cas (i)
à une température de 230 °C
et
dans le cas (ii)
à une température de 230 °C moins (230 °C multiplié par le double de la fraction massique dudit exactement un additif fluide à 23 °C, rapportée à la masse de la masse plastique),
et
dans le cas (iii)
à une température de 230 °C moins (230 °C multiplié par le double de la somme des fractions massiques desdits au moins deux additifs fluides à 23 °C, rapportée à la masse de la masse plastique),
étant, par rapport à la viscosité d'au moins l'un de ces constituants thermoplastiques, mesurée selon la méthode A2 de la norme ISO 11443:2014, et mesurée à une vitesse de cisaillement $\dot{\gamma}$ de 200 *1/s* et à une température de 230 °C, dans un rapport de 0,3 à 3,
et lesdits au moins deux constituants thermoplastiques se distinguant par au moins l'une des caractéristiques suivantes :

au moins une unité structurelle est différente,
ou
la différence de viscosité relative de la solution, mesurée selon la norme EN ISO 1628-1:2021, est d'au moins 5 %,
le procédé étant **caractérisé par** un indice de fusion,
ledit indice de fusion étant, dans le tronçon de la machine à vis qui commence à une distance de deux fois le diamètre interne de boîtier D avant le premier élément de vis qui n'est pas un élément de transport et qui se termine par le dernier élément de vis de la machine à vis,
de 1,18 à 8, ledit indice de fusion répondant à la formule :

$$Indice\ de\ fusion = \frac{(\tau_1 \cdot \delta\eta_1 + \tau_2 \cdot \delta\eta_2) \cdot \lambda \cdot n \cdot D^3}{d^2 \cdot c_p \cdot \dot{m}}$$

et dans laquelle :

$\tau_1$ est le temps de séjour moyen de la masse plastique dans le tronçon de la machine à vis commençant à une distance de deux fois le diamètre interne de boîtier D avant le premier élément de vis qui n'est pas un élément de transport,
et
dans le cas (i)
se terminant par le dernier élément de vis de la machine à vis,
dans les cas (ii) ou (iii)
se terminant au niveau du premier point d'ajout d'un additif fluide à 23 °C en aval du premier élément de vis qui n'est pas un élément de transport,
et où
$\delta\eta_1$ est le rapport de la viscosité dynamique de la masse plastique, à une vitesse de cisaillement $\dot{\gamma}$ correspondant à la vitesse de rotation n des arbres à vis et
dans le cas (i)

à une température de 230 °C
et
dans le cas (ii)
à une température de 230 °C moins (230 °C multiplié par le double de la fraction massique dudit exactement un additif fluide à 23 °C, rapportée à la masse de la masse plastique),
et
dans le cas (iii)
à une température de 230 °C moins (230 °C multiplié par le double de la somme des fractions massiques desdits au moins deux additifs fluides à 23 °C, rapportée à la masse totale de la masse plastique)
par rapport à la viscosité dynamique du constituant thermoplastique présentant la viscosité dynamique la plus élevée, mesurée à une vitesse de cisaillement $\dot{\gamma}$ de 200 1/s, et
dans le cas (i)
à une température de 230 °C
et
dans le cas (ii)
à une température de 230 °C moins (230 °C multiplié par le double de la fraction massique dudit exactement un additif fluide à 23 °C, rapportée à la masse de la masse plastique),
et
dans le cas (iii)
à une température de 230 °C moins (230 °C multiplié par le double de la somme des fractions massiques desdits au moins deux additifs fluides à 23 °C, rapportée à la masse de la masse plastique),
$\tau_2$ est
dans le cas (ii) et dans le cas (iii)
le temps de séjour moyen de la masse plastique dans le tronçon de la machine à vis commençant au niveau du premier point d'ajout d'un additif fluide à 23 °C en aval, à une distance de deux fois le diamètre interne de boîtier D avant le premier élément de vis qui n'est pas un élément de transport, et se terminant par le dernier élément de vis de la machine à vis,
et
dans le cas (i)
égal à zéro,
$\delta\eta_2$ est le rapport de la viscosité dynamique de la masse plastique, à une vitesse de cisaillement $\dot{\gamma}$ correspondant à la vitesse de rotation n des arbres de vis et à une température correspondant à la température de la masse plastique à l'extrémité du dernier élément de vis, par rapport à la viscosité dynamique du constituant thermoplastique présentant la viscosité dynamique la plus élevée, mesurée à une vitesse de cisaillement de 200 *1/s* et à une température correspondant à la température de la masse plastique à l'extrémité du dernier élément de vis,
$\lambda$ est la conductivité thermique, mesurée selon la norme EN ISO 11357-8:2021 à 23 °C, que présente la masse plastique immédiatement après la sortie de la machine à vis,
n est la vitesse de rotation des arbres à vis de la machine à vis,
d est le diamètre des granulés du polycarbonate contenu dans la formulation de la masse plastique présentant la viscosité relative la plus élevée mesurée selon la norme EN ISO 1628-1:2021,
D est le diamètre interne des boîtiers de la machine à vis, le diamètre interne de boîtier D étant le même pour tous les boîtiers de la machine à vis,
$c_p$ est la capacité thermique spécifique moyenne mesurée selon la norme ISO 11357-4:2021, dans la plage de températures comprise entre 250 °C et 300 °C,
m est le débit massique [kg/s] de la masse plastique dans la machine à vis.

**2.** Procédé selon la revendication 1, dans lequel l'indice de fusion est de 1,18 à 5.

**3.** Procédé selon la revendication 1 ou 2, dans lequel l'indice de fusion est de 1,2 à 3.

**4.** Procédé selon l'une quelconque des revendications 1 à 3, dans lequel, dans le cas où au moins un additif fluide à 23 °C est ajouté, l'un de ces additifs est le bisphénol-A-bis(diphénylphosphate) .

**5.** Procédé selon l'une quelconque des revendications 1 à 4, dans lequel tous les constituants thermoplastiques de la formulation sont des polycarbonates.

**6.** Procédé selon l'une quelconque des revendications 1 à 4, dans lequel, dans le cas où un constituant thermoplastique

desdits au moins deux constituants thermoplastiques n'est pas un polycarbonate, ce constituant thermoplastique, qui n'est pas un polycarbonate, est sélectionné dans le groupe comprenant les composés suivants :
carbonate de polyester, polyamide, polyester, en particulier polybutylène téréphtalate et polyéthylène téréphtalate, polylactides, polyéther, polyuréthane thermoplastique, polyacétal, fluoropolymère, en particulier polyfluorure de polyvinylidène, polyéthersulfone, polyoléfine, en particulier polyéthylène et polypropylène, polyimide, polyacrylate, en particulier polyméthacrylate de méthyle, oxyde de polyphénylène, sulfure de polyphénylène, polyéthercétone, polyaryléthercétone, polymères de styrène, en particulier polystyrène, copolymères de styrène, en particulier copolymère de styrène-acrylonitrile, copolymères séquencés d'acrylonitrile-butadiène-styrène et polychlorure de vinyle.

**7.** Procédé selon l'une quelconque des revendications 1 à 6, dans lequel la teneur en polycarbonate dans la formulation pour la production de la masse plastique est de 20 à 98 % en poids, en particulier de 40 à 80 % en poids.

**8.** Procédé selon l'une quelconque des revendications 1 à 7, dans lequel au moins l'un des constituants thermoplastiques, qui est un polycarbonate, est un polycarbonate aromatique à base de bisphénol A, en particulier un polycarbonate aromatique linéaire à base de bisphénol A.

**9.** Procédé selon la revendication 6, dans lequel, dans le cas où un constituant thermoplastique desdits au moins deux constituants thermoplastiques n'est pas un polycarbonate, ce constituant thermoplastique est un (co)polymère de vinyle modifié par un caoutchouc.

Figur 1

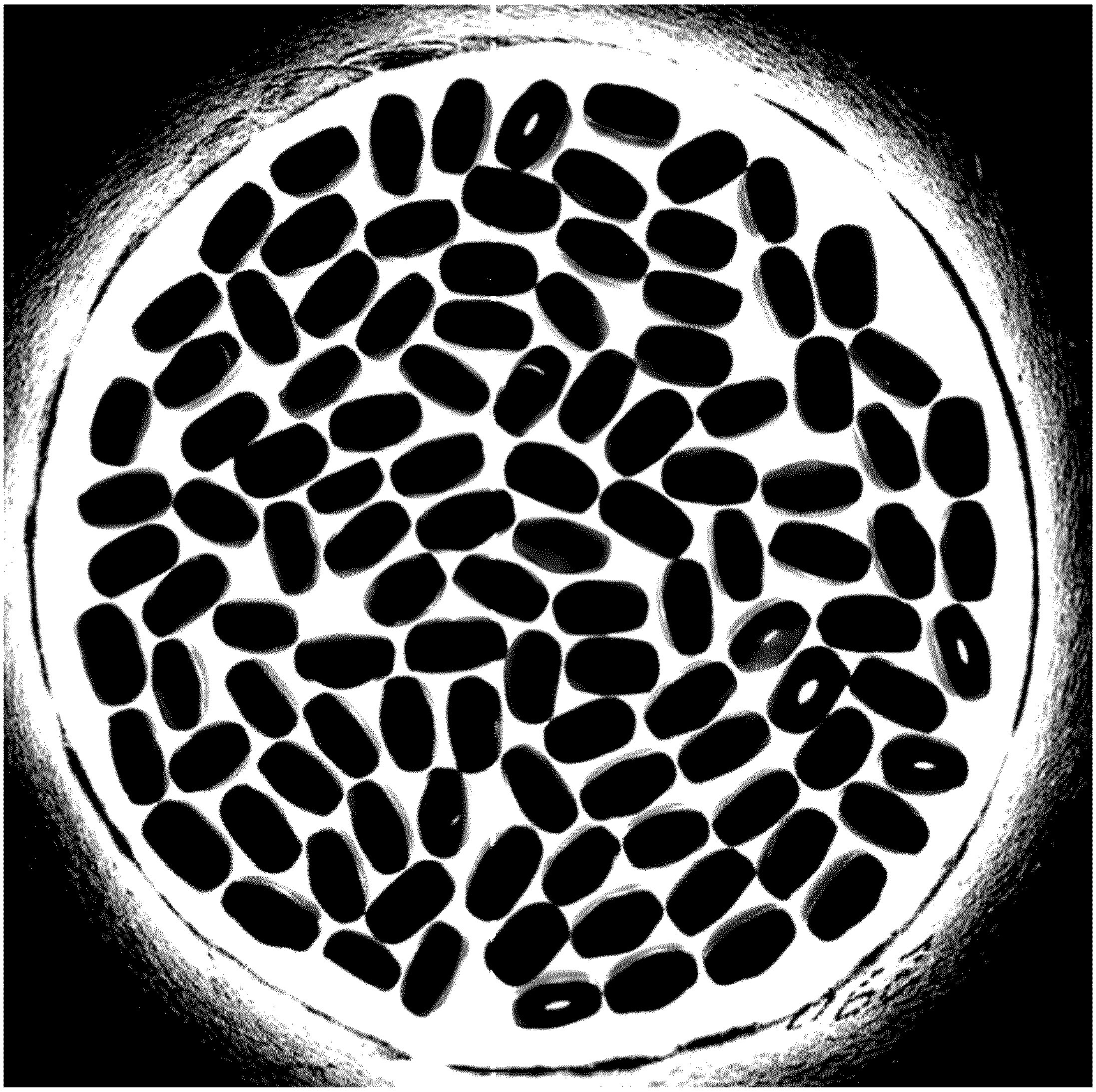

Figur 2

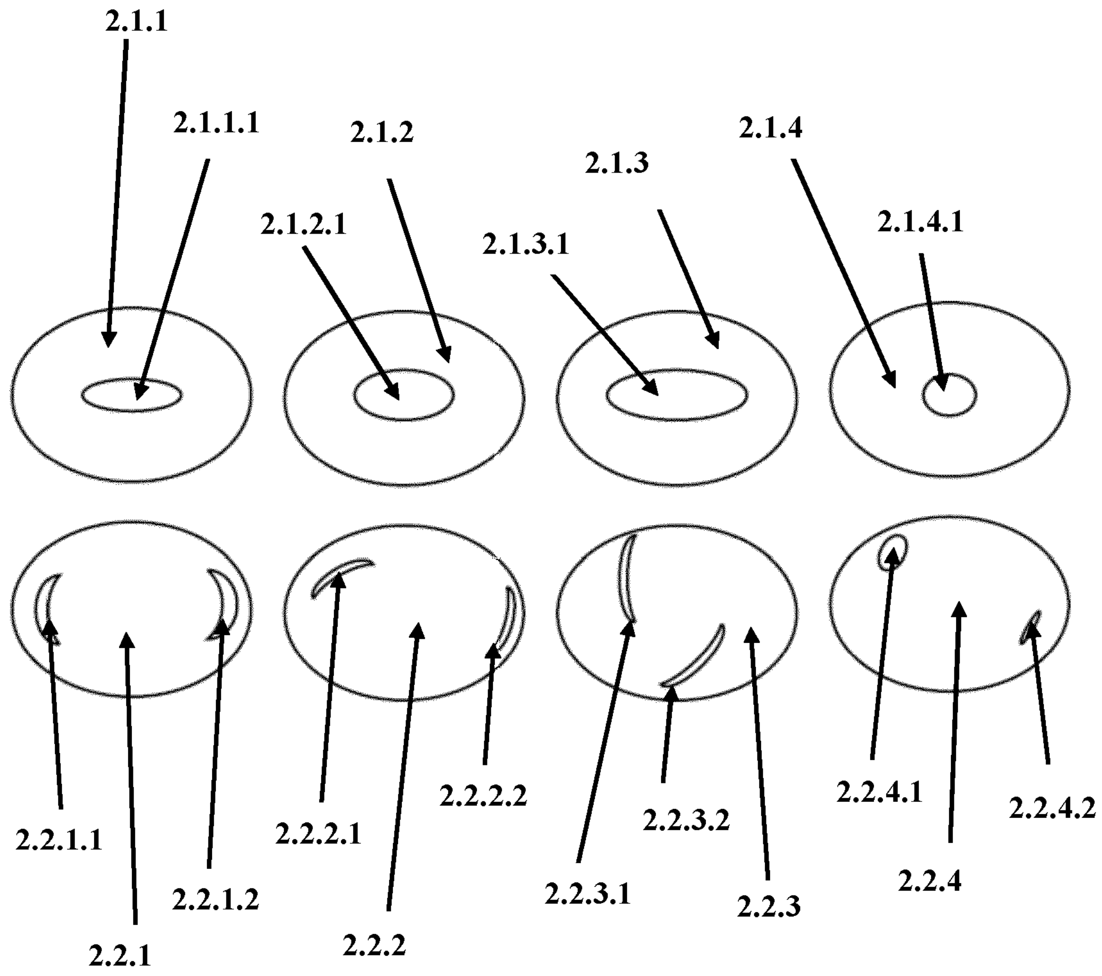
2.1.1
2.1.1.1
2.1.2
2.1.2.1
2.1.3
2.1.3.1
2.1.4
2.1.4.1
2.2.1.1
2.2.1
2.2.1.2
2.2.2.1
2.2.2
2.2.2.2
2.2.3.1
2.2.3.2
2.2.3
2.2.4.1
2.2.4
2.2.4.2

Figur 3

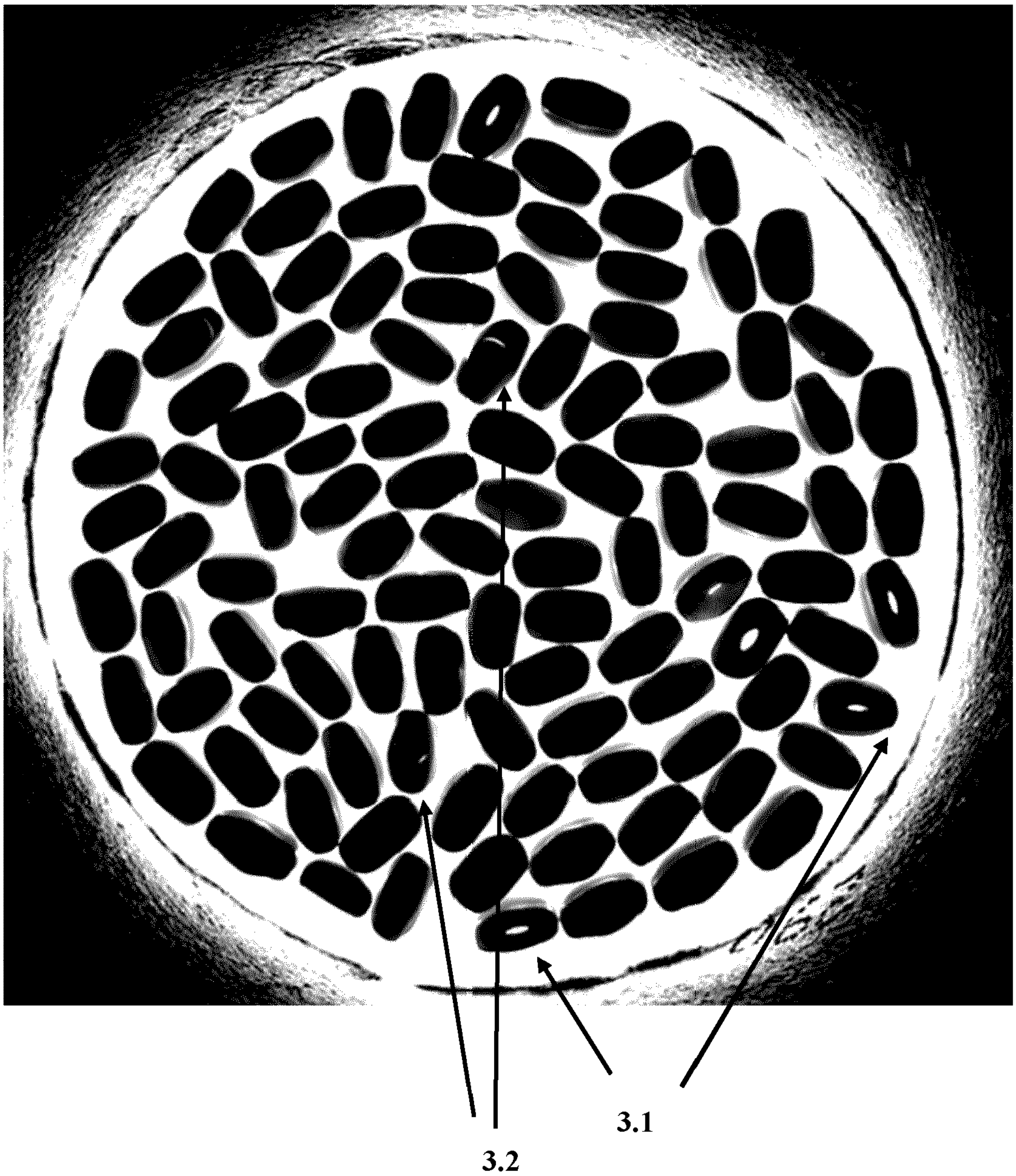

**Figur 4**

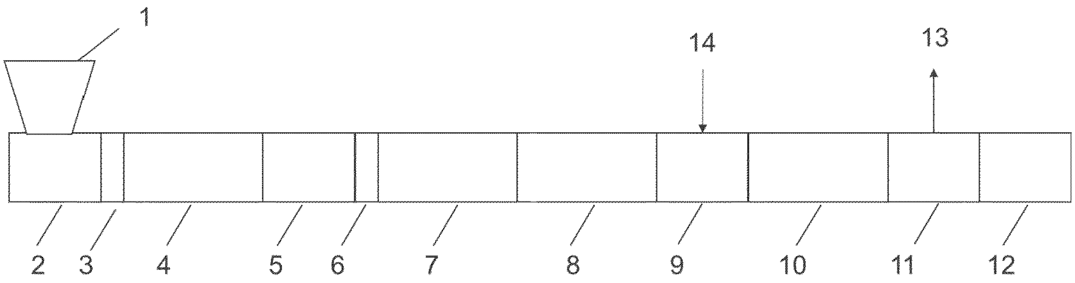


**Figur 5**

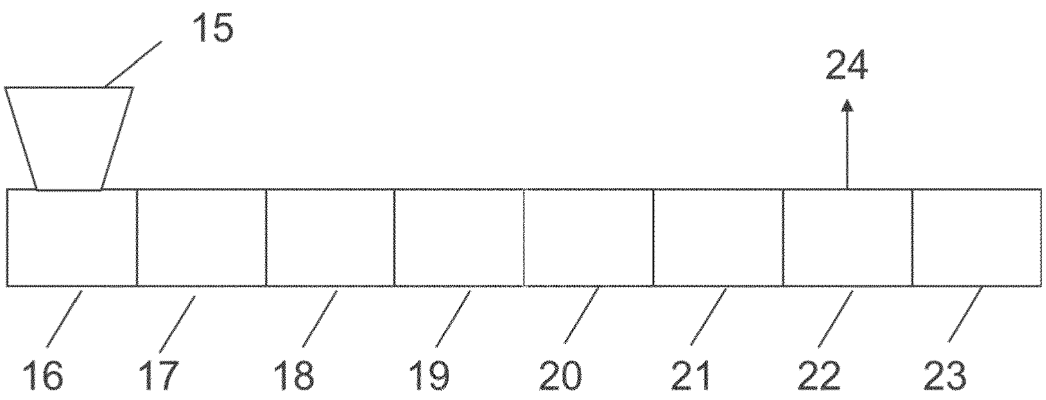


**Figur 6**

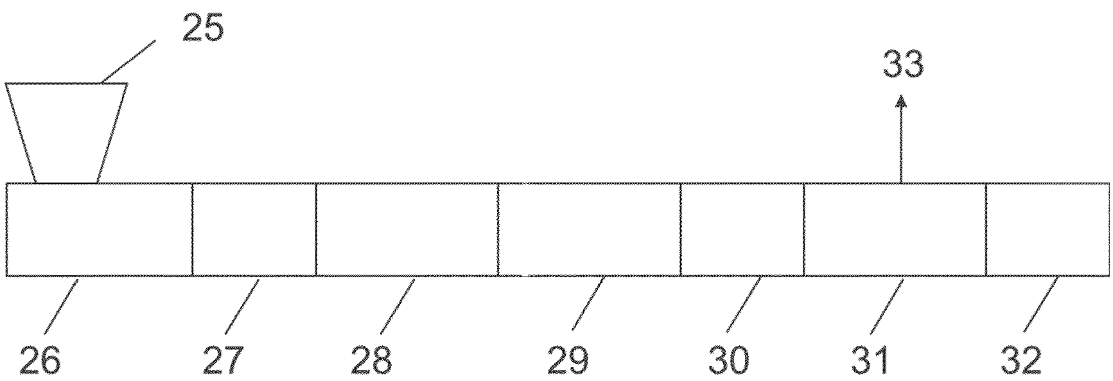

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4412725 A1
- DE 4412741 A1
- DE 19622582 A1
- DE 202007004997 U1
- DE 202007005010 U1
- WO 03020493 A1
- WO 2006045412 A2
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- WO 2004063249 A1
- WO 200105866 A1
- WO 2000105867 A
- US 5340905 A
- US 5097002 A
- US 5717057 A
- DE 2035390 A
- US 3644574 A
- DE 2248242 A
- GB 1409275 A
- US 4937285 P
- WO 9955772 A
- EP 363608 A
- EP 640655 A
- EP 728811 A
- DE 1961668 A
- WO 9740092 A


### In der Beschreibung aufgeführte Nicht-Patentliteratur


- **KLEMENS KOHLGRÜBER**. Der gleichläufige Doppelschneckenextruder. Hanser Verlag, 2016
- *Polymeren oder Schmelzen oder Lösungen von Kautschuken, eingesetzt*, vol. 1, 50-63
- **ELEMANS, P.H.M. et al.** Melting Model for Co-Rotating Twin-Screw Extruders. *ANTEC 2002, Conference Proceedings*, vol. I, 355-359
- **POTENTE, H. et al.** Melting of polymer blends in co-rotating twin screw extruders. Part I, Part II, Part III. *Int. Polymer Processing XVI*, 2001, vol. 2, 124-130, 131-142, 143-150
- **ELEMANS, P.H.M. et al.** Evaluation of melting performance of a co-rotating twin-screw extruder. *ANTEC 2002, Conference Proceedings*, vol. I, 350-354
- **JANSSEN, J.M.H.** ; **SIERKSMA, W.R.** Melting of high-heat Polyamide in a co-rotating twin-screw extruder. *ANTEC 2002, Conference Proceedings*, vol. III, 3712-3715
- Compoundieren mit zwölf Wellen. Carl Hanser Verlag, 2000, vol. 90, 60-62
- Chemistry and Physics of Polycarbonates. **SCHNELL**. Polymer Reviews. Interscience Publishers, 1964, vol. 9
- **D. FREITAG** ; **U. GRIGO** ; **P.R. MÜLLER** ; **H. NOUVERTNÉ** ; **BAYER AG**. Polycarbonates. *Encyclopedia of Polymer Science and Engineering*, 1988, vol. 11, 648-718
- Polycarbonate. **U. GRIGO** ; **K. KIRCHNER** ; **P.R. MÜLLER**. Polycarbonate, Polyacetale, Polyester, Celluloseester. Carl Hanser Verlag, 1992, vol. 3/1, 117-299
- **H. SCHNELL**. Chemistry and Physics of Polycarbonates. Interscience Publishers, 1964
- **W. SCHOLTAN** ; **H. LANGE** ; **KOLLOID, Z.** *Z. Polymere*, 1972, vol. 250, 782-1796
- **ULLMANNS**. Enzyklopädie der Technischen Chemie. 1980, vol. 19, 280
- **R. GÄCHTER** ; **H. MÜLLER**. Plastics Additives. Hanser Publishers, 1983, 15-25
- **JOHN MURPHY**. Additives for Plastics Handbook. Elsevier, 1999
- **HANS ZWEIFEL**. Plastics Additives Handbook. Hanser, 2001
- Ullmanns Enzyklopädie der technischen Chemie. 1979, vol. 18, 301
- **HOUBEN-WEYL**. Methoden der organischen Chemie, vol. 12/1, 43

- **KOHLGRÜBER** ; **BIERDEL** ; **RUST**. Polymer-Aufbereitung und Kunststoff-Compoundierung. Hanser-Verlag, 2019, 36